# EUROPEAN PATENT SPECIFICATION

(11) **EP 4 353 007 B1**
(45) Date of publication and mention of the grant of the patent: **30.07.2025**
(21) Application number: 22743962.7
(22) Date of filing: 06.06.2022
(51) Int. Cl.: H04W 36/00, H04W 16/18

(54) **AERIAL COVERAGE MAPPING FOR WIRELESS COMMUNICATIONS WITH AERIAL USER EQUIPMENT**
KARTIERUNG DER NETZABDECKUNG FÜR DIE DRAHTLOSE KOMMUNIKATION MIT LUFTGESTÜTZTEN BENUTZERGERÄTEN
CARTOGRAPHIE DE LA COUVERTURE RÉSEAU POUR LES COMMUNICATIONS SANS FIL AVEC UN ÉQUIPEMENT UTILISATEUR AÉRIEN

(30) Priority: 07.06.2021 GR 20210100370
(43) Date of publication of application: 17.04.2024
(73) Proprietor: QUALCOMM Incorporated, San Diego, CA 92121-1714 (US)
(72) Inventor: PHUYAL, Umesh, San Diego, California 92121-1714 (US); ZISIMOPOULOS, Haris, San Diego, California 92121-1714 (US); FACCIN, Stefano, San Diego, California 92121-1714 (US); RICO ALVARINO, Alberto, San Diego, California 92121-1714 (US); LIU, Le, San Diego, California 92121-1714 (US); TAKEDA, Kazuki, San Diego, California 92121-1714 (US)
(74) Representative: Tomkins & Co
(86) International application number: PCT/US2022/032297
(87) International publication number: WO 2022/260976

(56) References cited:
- US-A1- 2019 182 730
- US-A1- 2020 033 849
- US-A1- 2020 288 370
- SONY: "Discussion on measurement for Aerial Vehicles handover", vol. RAN WG2, no. Reno, USA; 20171127 - 20171201, 16 November 2017 (2017-11-16), XP051371089, Retrieved from the Internet <URL:http://www.3gpp.org/ftp/tsg%5Fran/WG2%5FRL2/TSGR2%5F100/Docs/> [retrieved on 20171116]

## Description

### FIELD OF TECHNOLOGY

The following relates to wireless communications, including aerial coverage mapping for wireless communications with aerial user equipment.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

In some wireless communications systems, the UEs may include aerial UEs which may be devices capable of flying or maneuvering through the air. One example of an aerial UE is an unmanned aerial vehicle (UAV), which may also be referred to as a drone. In some cases, signals from base stations may not be as strong for an aerial UE in an aerial state as would be the case if the UE were at ground level at a same location (e.g., to base station antenna panels being directed toward ground level versus at higher elevations above ground level). Such variable signal strength may result in less reliable or intermittent coverage for aerial UEs, and techniques to enhance coverage for aerial UEs may be beneficial to enhance communications efficiency and reliability.
US 2020/288370 A1 discloses a method comprising: receiving, from a base station, a configuration message comprising information regarding a threshold signal strength and a threshold number of neighboring base stations; and transmitting a measurement report to the base station after at least one condition is satisfied, wherein the at least one condition comprises a first condition in which a strength of a signal received from at least one neighboring base station is greater than the threshold signal strength, and a second condition in which a number of the at least one neighboring base station is larger than or equal to the threshold number of neighboring base stations.
US 2019/182730 A1 discloses an apparatus of a UE comprising: processing circuitry, wherein to configure the UE for handover between a source eNB and a target eNB using aerial communications in a cellular network, the processing circuitry is to: decode measurement configuration information from the source eNB, the measurement configuration information including a plurality of height thresholds associated with aerial height of the UE; encode a measurement report for transmission to the source eNB, the measurement report including the aerial height of the UE and the measurement report generation triggered based on one or more triggering events associated with the plurality of height thresholds; decode RRC signaling from the source eNB, the RRC signaling including a handover command, the handover command based on a handover decision by the source eNB using the measurement report; and perform a handover from the source eNB to the target eNB based on the handover command; and memory coupled to the processing circuitry, the memory configured to store the measurement configuration information.
US 2020/033849 A1 discloses an apparatus to signal for aerial vehicles, comprising: an interface; and processing circuitry to issue, via the interface, a measurement configuration to transmit to an aerial vehicle UE (AV-UE), the measurement configuration: to establish a trigger event based on a height measurement that the AV-UE compares against a height threshold; and to cause the AV-UE to transmit, in response to detection of the trigger event, a measurement report comprising interference measurements obtained by the AV-UE.
3GPP, R2-1712992, "Discussion on measurement for Aerial Vehicles handover", Sony discusses measurement challenges in LTE-supported aerial vehicle handover.

### SUMMARY

The described techniques relate to improved methods, systems, devices, and apparatuses that support aerial coverage mapping for wireless communications with aerial user equipment. Various aspects of the disclosure provide techniques for measurement of reference signals by an aerial user equipment (UE), and reporting of the measurements to a serving base station. Reports of measurements (e.g., reference signal received power (RSRP) measurements) by multiple UEs for multiple different locations and altitudes may be used to determine coverage maps for multiple different heights or altitudes. Such coverage maps may be used to select cells or base stations that are to serve an aerial UE. In some cases, measurement and reporting may be configured separately for aerial and ground-level states.

In some cases, an aerial configuration may provide that measurements may be made by aerial UEs as part of a measurement procedure (e.g., a minimization of drive time (MDT) procedure) that may collect measurements of neighboring base stations while the UE is in an idle or inactive mode, and provide measurement information in a measurement report. In some cases, an aerial UE may be configured to collect measurements while the UE is in an aerial state, based on a height of the aerial UE (e.g., when the UE is at or above a first threshold height above ground level, below a second threshold height, or combinations thereof), based on a measured signal strength of a reference signal received from a base station, or any combinations thereof. Additionally or alternatively, an aerial UE may identify a number of other aerial UEs that are detected (e.g., by measuring a beacon or reference signals transmitted by the other aerial UEs) within certain range, and report the identified number of other aerial UEs. Such an indication of the number of other aerial UEs may be provided with a measurement report, or separately from the measurement report.
The invention is defined in the independent claims, to which reference should now be made. Advantageous embodiments are set out in the dependent claims.

### BRIEF DESCRIPTION OF THE DRAWINGS

FIG. 1 illustrates an example of a wireless communications system that supports aerial coverage mapping for wireless communications with aerial user equipment in accordance with aspects of the present disclosure.
FIG. 2 illustrates an example of a portion of a wireless communications system that supports aerial coverage mapping for wireless communications with aerial user equipment in accordance with aspects of the present disclosure.
FIG. 3 illustrates an example of height-based reporting that supports aerial coverage mapping for wireless communications with aerial user equipment in accordance with aspects of the present disclosure.
FIG. 4 illustrates an example of an aerial UE density reporting that supports aerial coverage mapping for wireless communications with aerial user equipment in accordance with aspects of the present disclosure.
FIG. 5 illustrates an example of a process flow that supports aerial coverage mapping for wireless communications with aerial user equipment in accordance with aspects of the present disclosure.
FIGs. 6 and 7 show block diagrams of devices that support aerial coverage mapping for wireless communications with aerial user equipment in accordance with aspects of the present disclosure.
FIG. 8 shows a block diagram of a communications manager that supports aerial coverage mapping for wireless communications with aerial user equipment in accordance with aspects of the present disclosure.
FIG. 9 shows a diagram of a system including a device that supports aerial coverage mapping for wireless communications with aerial user equipment in accordance with aspects of the present disclosure.
FIGs. 10 and 11 show block diagrams of devices that support aerial coverage mapping for wireless communications with aerial user equipment in accordance with aspects of the present disclosure.
FIG. 12 shows a block diagram of a communications manager that supports aerial coverage mapping for wireless communications with aerial user equipment in accordance with aspects of the present disclosure.
FIG. 13 shows a diagram of a system including a device that supports aerial coverage mapping for wireless communications with aerial user equipment in accordance with aspects of the present disclosure.
FIGs. 14 through 21 show flowcharts illustrating methods that support aerial coverage mapping for wireless communications with aerial user equipment in accordance with aspects of the present disclosure.

### DETAILED DESCRIPTION

Some wireless communications systems may support aerial user equipment (UEs) which may be devices capable of flying or maneuvering through the air. Such aerial UEs may be referred to as unmanned aerial vehicles or uncrewed aerial vehicles (UAVs) or drones. In some cases, dedicated spectrum may be available for aerial UEs (e.g., in a UAV specific cellular network). In addition to, or alternatively to, cases where dedicated spectrum of a UAV-specific network is available, aerial UEs may operate in traditional cellular spectrum (e.g., using 4G or 5G communications). In some cases, signals from base stations may not be as strong for an aerial UE in an aerial state as would be the case if the UE were at ground level at a same location. For example, base stations configured for terrestrial communications may have antenna panels that are directed toward ground level and are thus not specifically directed toward higher elevations above ground level. In such cases, the main lobes of the antenna panels may be directed toward relatively low altitudes or heights, but side lobes may be generated at higher altitudes or heights. However, such side lobes (and some portions of main lobes) may have relatively high variability in signal strength at different heights and at various different locations relative to the base station at such different heights. Such variable signal strength may result in less reliable or intermittent coverage for aerial UEs. Various aspects of the present disclosure provide techniques to provide coverage maps for aerial UEs which may be beneficial to enhance communications efficiency and reliability, such as through identification of cell boundaries at different heights, identification of weak coverage (e.g., for implementation of coverage enhancement techniques or candidate locations for additional or modified cells), or identification of pilot pollution, to name a few examples.

In some cases, a serving base station may identify that a UE has an aerial UE capability (e.g., based on a capability indication provided by the UE), and may configure the UE for measurement of reference signals and reporting of the measurements. Reports of measurements (e.g., reference signal received power (RSRP) measurements) by multiple UEs for multiple different locations and altitudes may be used for network management, such as to determine coverage maps, identify coverage holes or weak coverage, identify pilot pollution, identify and address overshoot coverage, determine uplink coverage, determine cell boundary mapping, identify candidate locations for cell addition or modification, or any combinations thereof. In some cases, measurement and reporting may be configured separately for aerial and ground-level states. In some cases, an aerial measurement and reporting configuration may provide that measurements may be made by aerial UEs as part of a measurement procedure (e.g., a minimization of drive time (MDT) procedure, or a radio resource management (RRM) procedure) that may collect measurements of multiple base stations (e.g., serving base station and one or more neighboring base stations) while the UE is in an idle or inactive mode (or in a connected mode if an immediate MDT is requested), and provide measurement information in a measurement report.

In some cases, an aerial UE may be configured to collect measurements while in an aerial state, based on a height of the aerial UE (e.g., when the UE is at or above a first threshold height above ground level, up to or below a second threshold height, or combinations thereof), based on a measured signal strength of a reference signal received from a base station, or any combinations thereof. Additionally or alternatively, an aerial UE may identify a number of other aerial UEs that are detected (e.g., by measuring a beacon or reference signals transmitted by the other aerial UEs) within certain range, and report the identified number of other aerial UEs. Such an indication of the number of other aerial UEs may be provided with a measurement report, or separately from the measurement report, and may provide an estimate of UAV or drone density within a vicinity of the reporting aerial UE.

Aspects of the disclosure are initially described in the context of wireless communications systems. Examples of aerial UE measurement and reporting that provides information for one or more aerial parameters are then discussed. Aspects of the disclosure are further illustrated by and described with reference to apparatus diagrams, system diagrams, and flowcharts that relate to aerial coverage mapping for wireless communications with aerial user equipment.

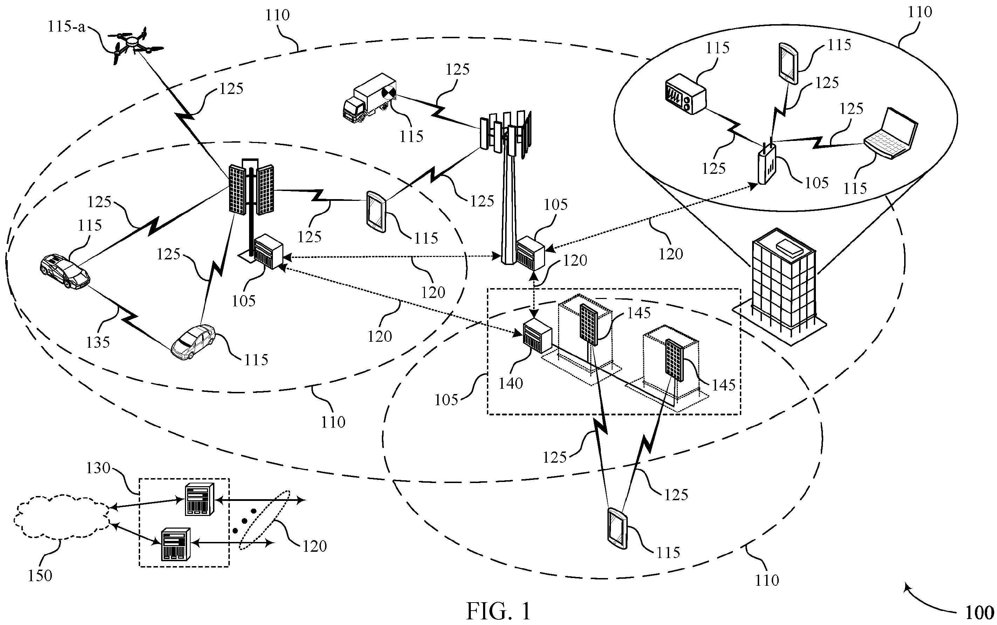

**FIG. 1** illustrates an example of a wireless communications system 100 that supports aerial coverage mapping for wireless communications with aerial user equipment in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

The time intervals for the base stations 105 or the UEs 115 may be expressed in multiples of a basic time unit which may, for example, refer to a sampling period of *Tₛ =* 1/(*Δfₘₐₓ · N_{f}*) seconds, where *Δfₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

In some cases, one or more UEs 115, such as aerial UE 115-a, may be configured to measure reference signals at one or more different heights above ground level, and report the measurements to its serving base station 105. Reports of measurements (e.g., reference signal received power (RSRP) measurements, reference signal received quality (RSRQ) measurements, signal to interference and noise ratio (SINR) measurements) by multiple UEs 115 for multiple different locations and altitudes may be used to determine coverage maps for multiple different heights or altitudes. In some cases, one or more UEs 115, such as aerial UE 115-a, may be configured to identify a number of other aerial UEs that are detected (e.g., by measuring a beacon or reference signals transmitted by the other aerial UEs) within certain range, and report the identified number of other aerial UEs to its serving base station 105. Such an indication by multiple UEs 115 of the number of other aerial UEs for multiple different locations and altitudes may be used to determine drone or UAV density maps for multiple different heights or altitudes. Such coverage and/or density maps may be used to select cells or base stations 105 that are to serve UEs 115 such as aerial UE 115-a. In some cases, measurement and reporting may be configured separately for aerial and ground-level UE states.

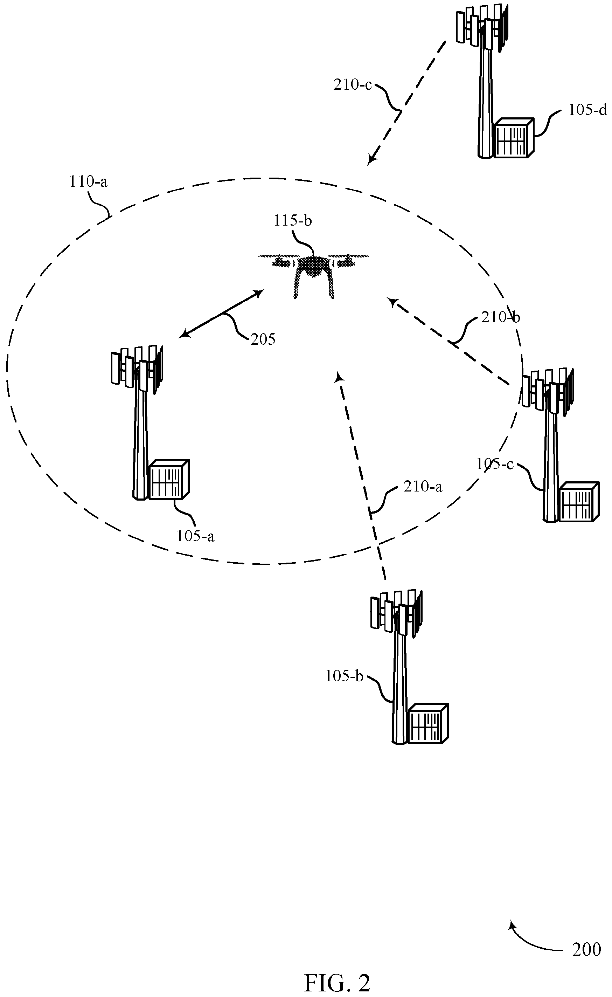

**FIG. 2** illustrates an example of a wireless communications system 200 that supports aerial coverage mapping for wireless communications with aerial user equipment in accordance with aspects of the present disclosure. In some examples, wireless communications system 200 may implement aspects of wireless communications system 100. For example, the wireless communications system 200 may include a serving base station 105-a (which may also be referred to as a serving cell) with coverage area 110-a (e.g., for ground-based coverage), multiple neighboring base stations 105-b through 105-d (which may also be referred to as neighboring cells), and a UE 115-b, which may be examples of base stations 105 and UEs 115 as described herein. The wireless communications system 200 may support multiple radio access technologies including 4G systems such as LTE systems, LTE-A systems, or LTE-A Pro systems; 5G systems, which may be referred to as NR systems; sidelink communications, which may be referred to as PC5 communications; a UAV-specific cellular network; or any combinations thereof.

In the example of FIG. 2, an aerial UE 115-b may establish a connection 205 (e.g., Uu connectivity in a NR communications network) with a serving cell at base station 105-a, and the aerial UE 115-b may communicate with the base station 105-a to support different applications (e.g., video, remote command and control (C2), etc.). The aerial UE 115-b, in some cases, may also establish one or more other connections (e.g., a PC5 connection) with another aerial UEs, which may support various applications. Examples of such applications include user-to-everything (U2X) detect and avoid (U2X-DAA) applications and other applications that may be used for collision control (e.g., using broadcast messages). In some examples, the aerial UE 115-b may also interact with a regulatory authority or service for identification and other purposes. As an example, the aerial UE 115-b may interact with the regulatory authority or service for U2X identification (ID) (e.g., remote identification), and may identify or receive flight information (e.g., using broadcast messages), may establish a remote C2 connection, and the like.

In some cases, to improve the quality of service experienced by aerial UEs 115, wireless communications system 200 may support measurement and reporting for multiple different heights. When referring to height or altitude as used herein, reference is made to a height relative to an established sea level or a local ground level associated with the serving base station 105-a, which is referred to interchangeably herein as height or altitude. In some cases, base station 105-a may identify that the UE 115-b has an aerial capability (e.g., based on a capability indication provided by the UE 115-b), and may configure the UE 115-b for measurement of reference signals 210 from neighboring base stations 105-b through 105-d (e.g., in addition to measurements of reference signals of serving base station 105-a) and reporting of the measurements. Reports of measurements (e.g., RSRP, RSRQ, SINR) by multiple UEs 115 for multiple different locations and altitudes may be used for network management, such as to determine coverage maps, identify coverage holes or weak coverage, identify pilot pollution, identify and address overshoot coverage, determine uplink coverage, determine cell boundary mapping, identify candidate locations for cell addition or modification, or any combinations thereof. In some cases, measurement and reporting may be configured separately for aerial and ground-level states. In some cases, an aerial measurement and reporting configuration may provide that measurements may be made by aerial UE 115-b as part of a measurement procedure such as a MDT procedure that may collect measurements of multiple base stations 105 while the UE 115-b is in an idle or inactive mode, and provide measurement information in the measurement report.

In some cases, a terrestrial or ground-level measurement configuration may be provided that may be based on existing MDT framework that supports measurement of neighbor cells, multimedia broadcast single frequency network (MBSFN) measurement results, wireless local area network (WLAN) measurement results and Bluetooth measurement results. In some cases, such terrestrial or ground-level measurement reports may provide a physical cell identity (PCID) of the logged cell; carrier frequency; RSRP and RSRQ for 4G and 5G cells; received signal code power (RSCP) and Ec/No (i.e., received energy per chip (Ec) of a pilot channel divided by the total noise power density (No)); a measured received signal level (Rxlev) of one or more cells; a pilot Pn phase and pilot strength for one or more cells; a received signal strength indicator (RSSI) and round trip time (RTT) for WLAN access points (Aps); a RSSI for Bluetooth Beacons, or any combinations thereof. In such cases, while logging neighbor cell measurements, the UE 115-b may determine a fixed number of best cells based on the measurement quantity used for ranking during cell reselection per frequency or RAT.

In some cases, an aerial measurement configuration may be provided for the aerial UE 115-b, in which fewer parameters may be measured and reported as compared to the ground-based measurement configuration. For example, in some cases, the aerial measurement configuration may provide that Bluetooth and WLAN measurements are not obtained or reported. Aerial and ground-based measurement configuration may be provided by RRC signaling, in some examples. The measurement reports may provide for finding coverage holes, weak coverage, pilot pollution, addressing overshoot coverage, coverage mapping, uplink coverage mapping, cell boundary mapping, and the like. Additionally, in some cases, two modes may be supported for the measurement MDT reporting including logged MDT (e.g., that reports measurements made while in idle or inactive mode) and immediate MDT (e.g., that prompts new measurement and reporting). In some cases, aerial-based reporting may use both event triggered and periodical reporting. Further, aerial-based reports may be differentiated from ground-based reports, such that one data set should not pollute the other set(s), and the network may differentiate the data sets.

In some cases, the measurement reports may provide information related to a hardware configuration of the UE 115-b, which may make a difference in terms of how the result is interpreted. For example, measured SINR, RSRP, and the like, may be interpreted differently depending on whether the UE 115-b has a directed antenna, or has car mounted antenna, and the like, which may be indicated in the measurement report. In some cases, the configuration information for the aerial-based measurement report may provide that the UE 115-b is to indicate one or more specific characteristics of the UE type (e.g., antenna type, antenna location/direction, etc.). Additionally, because the aerial UE 115-b may in some cases detect signals from a larger number of neighbor cells while in an aerial state relative to a ground-based state (e.g., due to line-of-sight (LoS) channel conditions at higher altitudes), which may result in a larger amount of measurement logging and reporting for the aerial state compared to a non-aerial or ground-based state. In some cases, one or more mechanisms are provided to limit the amount of aerial specific measurement logging and reporting, such as a configured maximum number of cells to report for aerial state reporting, a maximum total number of aerial plus non-aerial cells to report, one or more triggers to log a specific measurement (e.g., if N neighbor cells satisfy a measurement threshold then log a best cell from them).

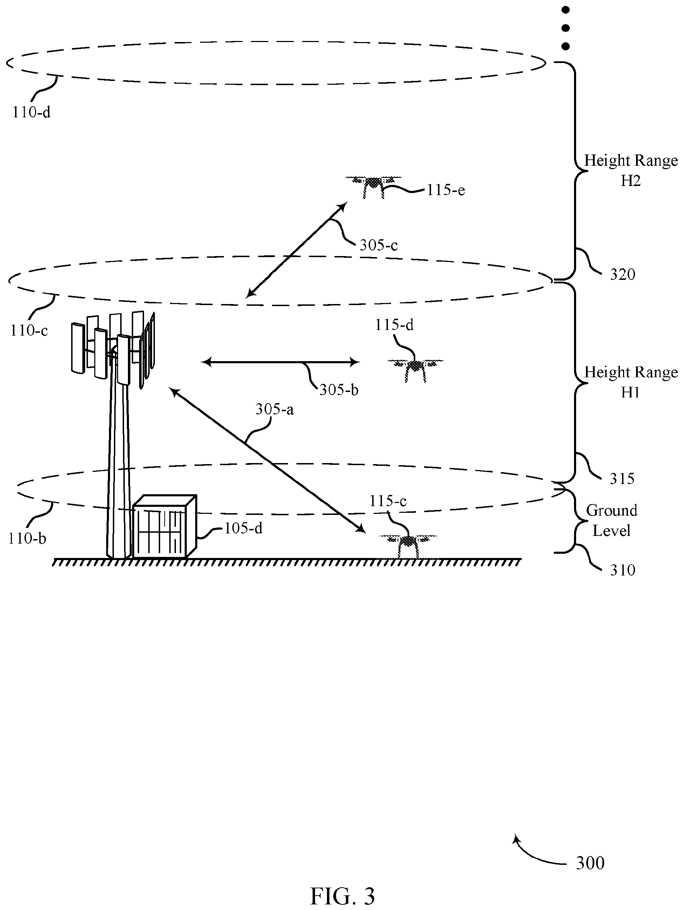

In some case, the aerial-based measurement reports may be used to generate height-based coverage maps. For example, at different heights a same base station 105-a may have different coverage due to antenna tilt and sidelobes. In some cases, aerial-based measurement reports may include a height parameter along with other measurements, which may allow for the network to construct coverage maps for different heights by extracting the parameters relevant for the particular height (e.g., as discussed in more detail with reference to the example of FIG. 3). Further, such height/altitude information along with other measurement information may enable creation of height specific neighbor lists (e.g., for handover management). Additionally, in some cases aerial-based measurement reports may be triggered based on a measured height/altitude of the aerial UE 115-b. For example, the aerial UE 115-b may be configured to log the measurements when the UE 115-b height is above a threshold height (e.g., above 50 meters), or is within a height range (e.g., above 50 meters and below 60 meters). In some cases, a separate indication of height may not be provided with the measurement report when the reporting is triggered by a height threshold.

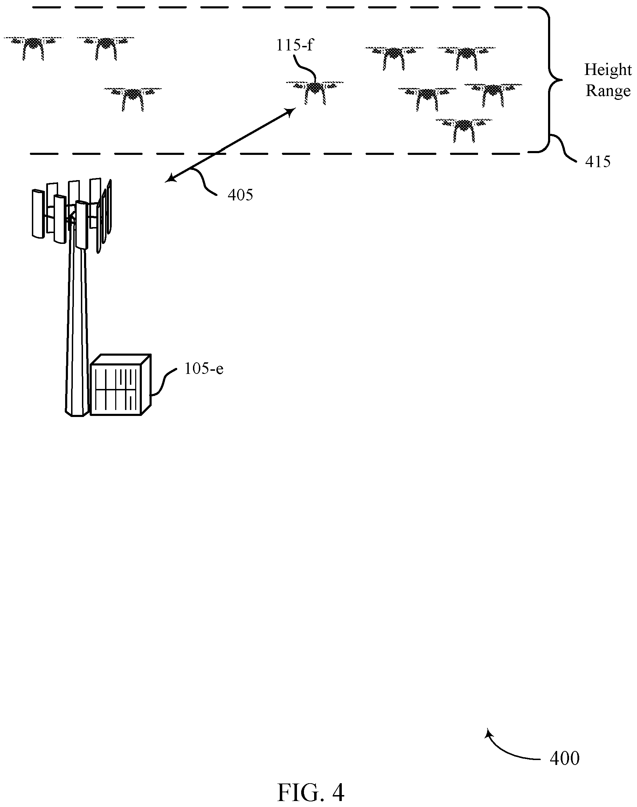

Additionally or alternatively, the aerial UE 115-b may be configured to report information about "aerial traffic" on a given "aerial highway" that may be useful for network management, such as by providing an indication of a number of other UEs that are detected in the vicinity of the aerial UE 115-b (e.g., as discussed in more detail with reference to the example of FIG. 4). In one example, the vicinity may be defined as a spherical volume of a certain radius in which the aerial UE 115-b may detect a broadcast or beacon from other UEs (e.g., beacons transmitted for identification and collision avoidance by UAVs or drones). The radius or the parameter for the vicinity, in some case, may be predefined or configured by the base station 105-a (e.g., via RRC, broadcast RRC (SIB), MAC CE signaling, etc.). In some cases, the aerial-based measurement report may also include an indication of whether the report is taken in an aerial state, which may allow differentiation between reports from "flying" UAVs in contrast to those on the ground (e.g., because height information alone may not be sufficient to determine aerial state due to fluctuations in ground level elevation).

In some cases, as part of a connection establishment for the connection 205, the aerial UE 115-b may provide capability information. For example, the aerial UE 115-b may indicate its capabilities of certain types of measurements (e.g., whether the UE 115-b is capable of logging and reporting aerial-specific MDT measurements). Based on the capability indication, the network or serving base station 105-a may configure the aerial UE 115-b for aerial-based measurements and reporting.

**FIG. 3** illustrates an example of a height-based reporting 300 that supports aerial coverage mapping for wireless communications with aerial user equipment in accordance with aspects of the present disclosure. In some examples, height-based reporting 300 may be implemented in aspects of wireless communications systems 100 or 200. For example, a serving base station 105-d may configure a first aerial UE 115-c, a second aerial UE 115-d, and a third aerial UE 115-e, to provide aerial-based measurement reports via connections 305.

In this example, the aerial-based measurement reporting may be configured such that each UE 115 may provide an indication of a height, which may be used to determine coverage mapping for multiple coverage areas 110, which may include a ground level coverage area 110-b, mapping for which may be based on ground level 310 measurements such as provided by first aerial UE 115-c in this example. In some cases, as discussed herein, UEs 115 may be configured with one or more height thresholds that trigger measurement and reporting, and in such cases UE 115 height may be inferred based on the height triggers rather than an explicit height parameter that is reported by the UE 115. The coverage maps may also include mapping for a first height coverage area 110-c, which may be based on measurements from UEs 115, such as second aerial UE 115-d, that are within a first height range 315 (e.g., between 50 meters and 60 meters). Further, in this example, the coverage maps may also include mapping for a second height coverage area 110-d, which may be based on measurements from UEs 115, such as third aerial UE 115-e, that are within a second height range 320 (e.g., between 60 meters and 75 meters). As discussed herein, such height-based coverage mapping may allow for enhanced management of the network such as for identifying potential cells for handover, identifying UEs 115 that may need adjustments to transmission power or coverage enhancement, and the like.

**FIG. 4** illustrates an example of an aerial UE density reporting 400 that supports aerial coverage mapping for wireless communications with aerial user equipment in accordance with aspects of the present disclosure. In some examples, aerial UE density reporting 400 may be implemented in aspects of wireless communications systems 100 or 200. For example, a serving base station 105-e may configure an aerial UE 115-f to provide aerial-based measurement reports via connection 405 and may additionally, or alternatively, configure the aerial UE 115-f to provide UAV or drone density reporting.

In this example, the UAV or drone density reporting may provide an indication of a number of other UEs 115 that are detected by the aerial UE 115-f within a vicinity (e.g., a spherical volume of a certain radius) or height range 415. In some cases, the radius or the parameter for the vicinity may be predefined or configured by the network (e.g., via base station 105-e), which may be provided via RRC, broadcast RRC (e.g., a system information block (SIB)), medium access control (MAC) control element (CE) signaling, or combinations thereof. In some cases, the density reporting may be triggered as an immediate MDT report, in which the UE 115-g may take new measurements of neighboring cells and identify a number of other UEs 115 that are detected (e.g., based on broadcast signals or collision avoidance beacons, etc.). In other cases, the UE 115-f may not take new neighboring cell measurements, and may provide logged measurements from prior measurement occasions along with an indication of the number of detected UEs 115. In further cases, the aerial UE 115-f may not provide measurements, and simply provide an indication of the number of other detected UEs 115. In some cases, the base station 105-e may configure aerial UE 115-f behavior for reporting UAV or drone density based on an immediate MDT trigger for an aerial-based report.

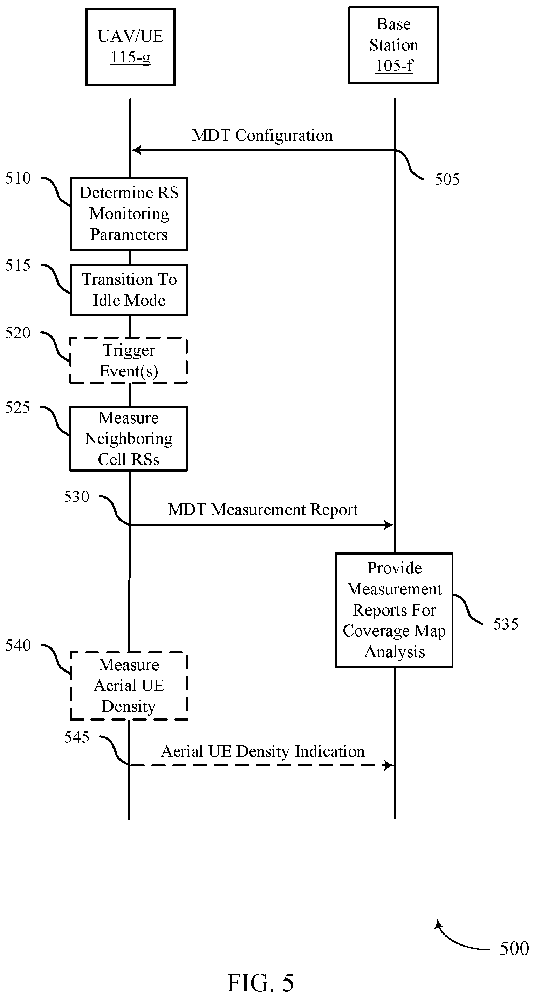

**FIG. 5** illustrates an example of a process flow 500 that supports aerial coverage mapping for wireless communications with aerial user equipment in accordance with aspects of the present disclosure. In some examples, process flow 500 may implement aspects of wireless communications system 100 or 200. Process flow 500 may be implemented by a UE 115-g (e.g., an aerial UE or UAV/drone) and a base station 105-f as described herein. In the following description of the process flow 500, the communications between the UE 115-g and the base station 105-f may be transmitted in a different order than the example order shown, or the operations performed by the UE 115-g and base station 105-f may be performed in different orders or at different times. Some operations may also be omitted from the process flow 500, and other operations may be added to the process flow 500.

In some examples, the operations illustrated in process flow 500 may be performed by hardware (e.g., including circuitry, processing blocks, logic components, and other components), code (e.g., software or firmware) executed by a processor, or any combination thereof. Alternative examples of the following may be implemented, where some steps are performed in a different order than described or are not performed at all. In some cases, steps may include additional features not mentioned below, or further steps may be added.

At 505, base station 105-f may transmit a MDT configuration to the UE 115-g. In some cases, the MDT configuration may provide for multiple measurement and reporting events for aerial-based measurement reporting, ground-based measurement reporting, or combinations thereof.

At 510, the UE 115-g may determine reference signal monitoring parameters. In some cases, the monitoring parameters may include one or more triggering conditions (e.g., height-based triggers, signal strength triggers of measured reference signals from one or more base stations, etc.). In some cases, different parameters for measurement reporting may be configured based on whether the MDT report is a ground-based report (e.g., that may include WLAN and Bluetooth parameters) versus an aerial-based report (e.g., that may not include WLAN and Bluetooth parameters, but may include height parameters).

At 515, the UE 115-g may transition to an idle mode (e.g., based on inactivity of the connection with the base station 105-f). Optionally, at 520, one or more trigger events may be present that trigger measurement by the UE 115-g. At 525, the UE 115-g may measure one or more neighboring cell reference signals and log the measurements for MDT reporting. At 530, the UE 115-g may transmit the MDT measurement report to the base station 105-f.

At 535, the base station 105-f may receive the measurement report from the UE 115-g, and in some cases one or more other UEs, and provide measurement reports for coverage map analysis. For example, the base station 105-f may provide measurement reports to a network entity for coverage mapping and analysis.

Optionally, at 540, the UE 115-g may measure aerial UE density. In some cases, the aerial UE density may be measured based on a number of detected aerial UEs/UAVs/drones at the UE 115-g (e.g., based on discovery signals or beacons of other UEs). At 545, the UE 115-g may transmit an aerial UE density indication to the base station 105-f. In some cases, the base station 105-f, or another network entity, may use the density information for management of a UAV highway or corridor.

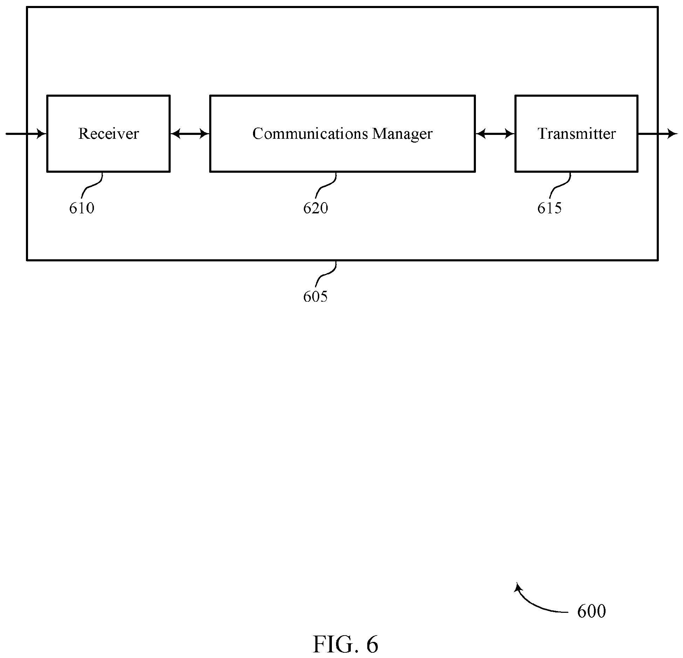

**FIG. 6** shows a block diagram 600 of a device 605 that supports aerial coverage mapping for wireless communications with aerial user equipment in accordance with aspects of the present disclosure. The device 605 may be an example of aspects of a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to aerial coverage mapping for wireless communications with aerial user equipment). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to aerial coverage mapping for wireless communications with aerial user equipment). In some examples, the transmitter 615 may be co-located with a receiver 610 in a transceiver module. The transmitter 615 may utilize a single antenna or a set of multiple antennas.

The communications manager 620, the receiver 610, the transmitter 615, or various combinations thereof or various components thereof may be examples of means for performing various aspects of aerial coverage mapping for wireless communications with aerial user equipment as described herein. For example, the communications manager 620, the receiver 610, the transmitter 615, or various combinations or components thereof may support a method for performing one or more of the functions described herein.

In some examples, the communications manager 620, the receiver 610, the transmitter 615, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 620, the receiver 610, the transmitter 615, or various combinations or components thereof may be implemented in code (e.g., as communications management software or firmware) executed by a processor. If implemented in code executed by a processor, the functions of the communications manager 620, the receiver 610, the transmitter 615, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 620 may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communication at a UE in accordance with examples as disclosed herein. For example, the communications manager 620 may be configured as or otherwise support a means for receiving, from a first base station, signaling including configuration information for transmission of measurement reports of reference signals from neighboring base stations that are measured at the UE, where the UE is an aerial UE and the configuration information indicates parameters associated with aerial measurements of the UE, and where the aerial measurements are configured to be obtained in any of a connected mode or an idle mode or an inactive mode at the UE. The communications manager 620 may be configured as or otherwise support a means for measuring the reference signals from the neighboring base stations. The communications manager 620 may be configured as or otherwise support a means for transmitting a measurement report including the measurements of the reference signals and aerial parameters associated with the measurements.

By including or configuring the communications manager 620 in accordance with examples as described herein, the device 605 (e.g., a processor controlling or otherwise coupled to the receiver 610, the transmitter 615, the communications manager 620, or a combination thereof) may support techniques for aerial-based coverage mapping for aerial UEs, which may provide for enhanced determination of coverage maps by height, identification of coverage holes or weak coverage by height, network management for support of aerial UEs, which may provide for more reliable and efficient communications with aerial UEs.

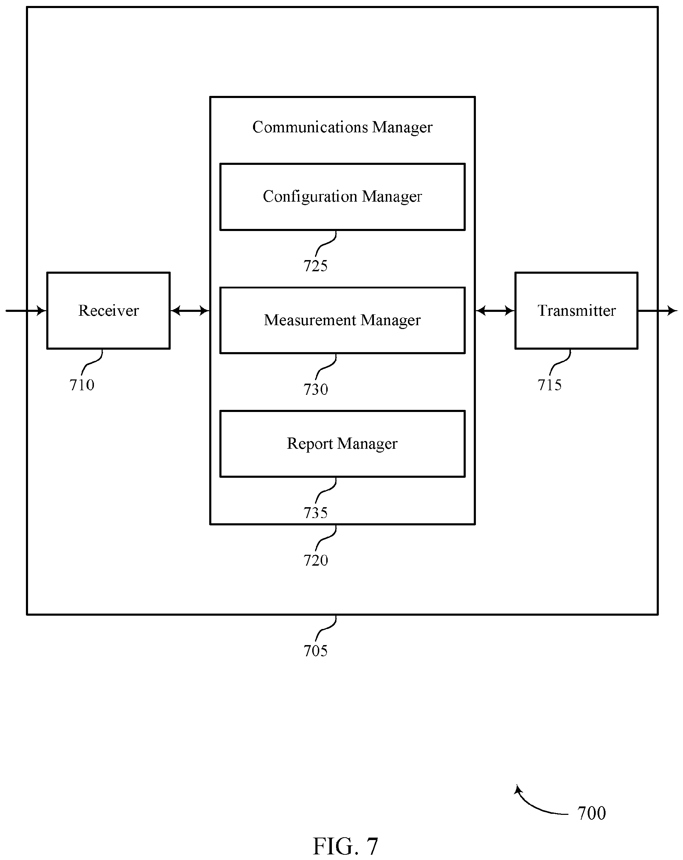

**FIG. 7** shows a block diagram 700 of a device 705 that supports aerial coverage mapping for wireless communications with aerial user equipment in accordance with aspects of the present disclosure. The device 705 may be an example of aspects of a device 605 or a UE 115 as described herein. The device 705 may include a receiver 710, a transmitter 715, and a communications manager 720. The device 705 may also include a processor. Each of these components may be in communication with one another (e.g., via one or more buses).

The receiver 710 may provide a means for receiving information such as packets, user data, control information, or any combination thereof associated with various information channels (e.g., control channels, data channels, information channels related to aerial coverage mapping for wireless communications with aerial user equipment). Information may be passed on to other components of the device 705. The receiver 710 may utilize a single antenna or a set of multiple antennas.

The transmitter 715 may provide a means for transmitting signals generated by other components of the device 705. For example, the transmitter 715 may transmit information such as packets, user data, control information, or any combination thereof associated with various information channels (e.g., control channels, data channels, information channels related to aerial coverage mapping for wireless communications with aerial user equipment). In some examples, the transmitter 715 may be co-located with a receiver 710 in a transceiver module. The transmitter 715 may utilize a single antenna or a set of multiple antennas.

The device 705, or various components thereof, may be an example of means for performing various aspects of aerial coverage mapping for wireless communications with aerial user equipment as described herein. For example, the communications manager 720 may include a configuration manager 725, a measurement manager 730, a report manager 735, or any combination thereof. The communications manager 720 may be an example of aspects of a communications manager 620 as described herein. In some examples, the communications manager 720, or various components thereof, may be configured to perform various operations (e.g., receiving, monitoring, transmitting) using or otherwise in cooperation with the receiver 710, the transmitter 715, or both. For example, the communications manager 720 may receive information from the receiver 710, send information to the transmitter 715, or be integrated in combination with the receiver 710, the transmitter 715, or both to receive information, transmit information, or perform various other operations as described herein.

The communications manager 720 may support wireless communication at a UE in accordance with examples as disclosed herein. The configuration manager 725 may be configured as or otherwise support a means for receiving, from a first base station, signaling including configuration information for transmission of measurement reports of reference signals from neighboring base stations that are measured at the UE, where the UE is an aerial UE and the configuration information indicates parameters associated with aerial measurements of the UE, and where the aerial measurements are configured to be obtained in any of a connected mode or an idle mode or an inactive mode at the UE. The measurement manager 730 may be configured as or otherwise support a means for measuring the reference signals from the neighboring base stations. The report manager 735 may be configured as or otherwise support a means for transmitting a measurement report including the measurements of the reference signals and aerial parameters associated with the measurements.

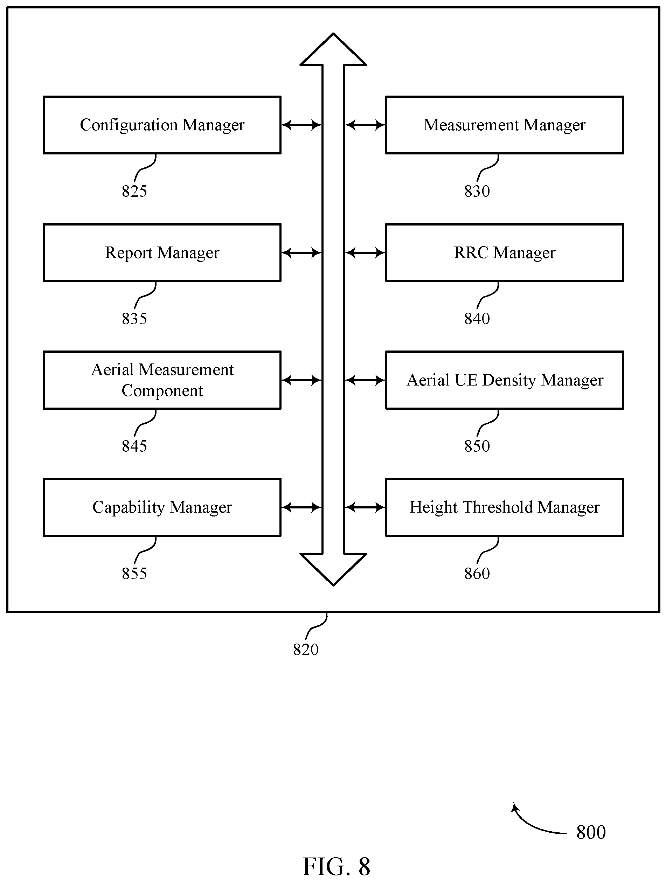

**FIG. 8** shows a block diagram 800 of a communications manager 820 that supports aerial coverage mapping for wireless communications with aerial user equipment in accordance with aspects of the present disclosure. The communications manager 820 may be an example of aspects of a communications manager 620, a communications manager 720, or both, as described herein. The communications manager 820, or various components thereof, may be an example of means for performing various aspects of aerial coverage mapping for wireless communications with aerial user equipment as described herein. For example, the communications manager 820 may include a configuration manager 825, a measurement manager 830, a report manager 835, an RRC manager 840, an aerial measurement component 845, an aerial UE density manager 850, a capability manager 855, a height threshold manager 860, or any combination thereof. Each of these components may communicate, directly or indirectly, with one another (e.g., via one or more buses).

The communications manager 820 may support wireless communication at a UE in accordance with examples as disclosed herein. The configuration manager 825 may be configured as or otherwise support a means for receiving, from a first base station, signaling including configuration information for transmission of measurement reports of reference signals from neighboring base stations that are measured at the UE, where the UE is an aerial UE and the configuration information indicates parameters associated with aerial measurements of the UE, and where the aerial measurements are configured to be obtained in any of a connected mode or an idle mode or an inactive mode at the UE. The measurement manager 830 may be configured as or otherwise support a means for measuring the reference signals from the neighboring base stations. The report manager 835 may be configured as or otherwise support a means for transmitting a measurement report including the measurements of the reference signals and aerial parameters associated with the measurements. In some examples, the measurement report further includes one or more characteristics associated with a hardware configuration of the UE. In some examples, the one or more characteristics include an antenna type of the UE, an aerial UE type of the UE, or any combinations thereof.

In some examples, to support receiving, the RRC manager 840 may be configured as or otherwise support a means for receiving radio resource configuration (RRC) signaling that configures at least one aerial-type measurement report that is separate from measurement reports provided from a ground-based UE.

In some examples, the measurement manager 830 may be configured as or otherwise support a means for determining a number of neighboring base stations to include in the measurement report based on one or more limit values associated with the configuration information. In some examples, the number of neighboring base stations is limited to a configured maximum number of base stations measured when in an aerial state, a configured total number of base stations measured when in the aerial state and a non-aerial state, or any combinations thereof. In some examples, the number of neighboring base stations to include in the measurement report corresponds to an amount of base stations having a measurement value that triggers the UE to log the measurement. In some examples, the aerial parameters include a height of the UE associated with the measurements of the reference signals from the neighboring base stations. In some examples, the measuring the reference signals is performed responsive to a trigger event associated with the UE. In some examples, the trigger event is a height of the UE that is at or above a configured height threshold or that is within a configured range of heights. In some examples, a separate height measurement of the UE is implicitly indicated based on the trigger event.

In some examples, the aerial UE density manager 850 may be configured as or otherwise support a means for identifying a number of other aerial UEs within a predetermined range of the UE. In some examples, the aerial UE density manager 850 may be configured as or otherwise support a means for providing an indication of the number of other aerial UEs to the base station with the measurement report, where the measurement report includes newly measured reference signal measurements or previously measured reference signal measurements. In some examples, the measurement report further includes an indication of whether reported measurements were obtained by the UE when in an aerial state or in a ground state.

In some examples, the capability manager 855 may be configured as or otherwise support a means for transmitting, to the first base station, a capability message that indicates the UE has an aerial capability, that indicates capabilities to provide different types of measurement reports to the first base station, or any combinations thereof.

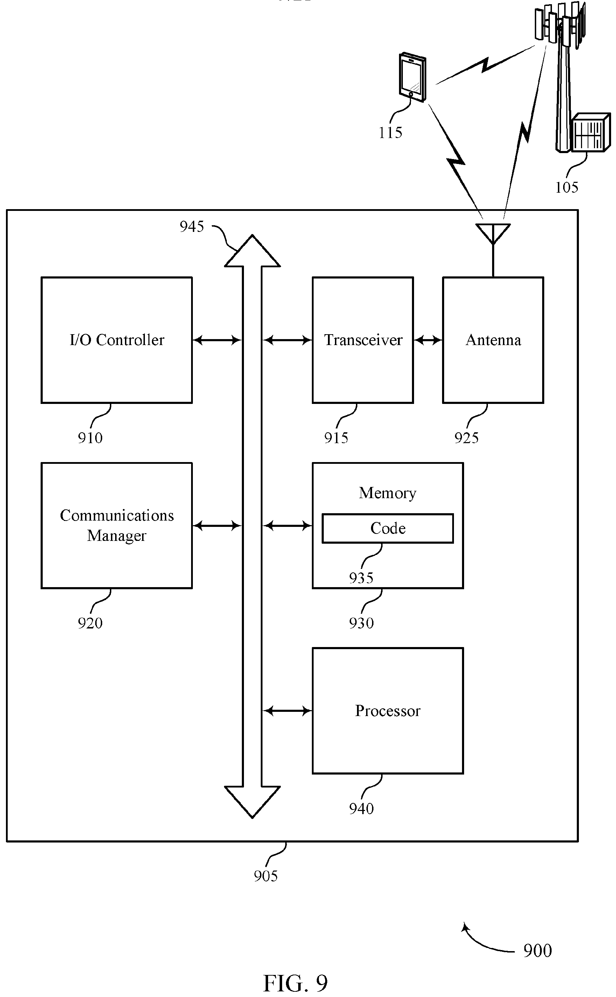

**FIG. 9** shows a diagram of a system 900 including a device 905 that supports aerial coverage mapping for wireless communications with aerial user equipment in accordance with aspects of the present disclosure. The device 905 may be an example of or include the components of a device 605, a device 705, or a UE 115 as described herein. The device 905 may communicate wirelessly with one or more base stations 105, UEs 115, or any combination thereof. The device 905 may include components for bi-directional voice and data communications including components for transmitting and receiving communications, such as a communications manager 920, an input/output (I/O) controller 910, a transceiver 915, an antenna 925, a memory 930, code 935, and a processor 940. These components may be in electronic communication or otherwise coupled (e.g., operatively, communicatively, functionally, electronically, electrically) via one or more buses (e.g., a bus 945).

The I/O controller 910 may manage input and output signals for the device 905. The I/O controller 910 may also manage peripherals not integrated into the device 905. In some cases, the I/O controller 910 may represent a physical connection or port to an external peripheral. In some cases, the I/O controller 910 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 910 may represent or interact with a modem, a keyboard, a mouse, a touchscreen, or a similar device. In some cases, the I/O controller 910 may be implemented as part of a processor, such as the processor 940. In some cases, a user may interact with the device 905 via the I/O controller 910 or via hardware components controlled by the I/O controller 910.

In some cases, the device 905 may include a single antenna 925. However, in some other cases, the device 905 may have more than one antenna 925, which may be capable of concurrently transmitting or receiving multiple wireless transmissions. The transceiver 915 may communicate bi-directionally, via the one or more antennas 925, wired, or wireless links as described herein. For example, the transceiver 915 may represent a wireless transceiver and may communicate bi-directionally with another wireless transceiver. The transceiver 915 may also include a modem to modulate the packets, to provide the modulated packets to one or more antennas 925 for transmission, and to demodulate packets received from the one or more antennas 925. The transceiver 915, or the transceiver 915 and one or more antennas 925, may be an example of a transmitter 615, a transmitter 715, a receiver 610, a receiver 710, or any combination thereof or component thereof, as described herein.

The memory 930 may include random access memory (RAM) and read-only memory (ROM). The memory 930 may store computer-readable, computer-executable code 935 including instructions that, when executed by the processor 940, cause the device 905 to perform various functions described herein. The code 935 may be stored in a non-transitory computer-readable medium such as system memory or another type of memory. In some cases, the code 935 may not be directly executable by the processor 940 but may cause a computer (e.g., when compiled and executed) to perform functions described herein. In some cases, the memory 930 may contain, among other things, a basic I/O system (BIOS) which may control basic hardware or software operation such as the interaction with peripheral components or devices.

The processor 940 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 940 may be configured to operate a memory array using a memory controller. In some other cases, a memory controller may be integrated into the processor 940. The processor 940 may be configured to execute computer-readable instructions stored in a memory (e.g., the memory 930) to cause the device 905 to perform various functions (e.g., functions or tasks supporting aerial coverage mapping for wireless communications with aerial user equipment). For example, the device 905 or a component of the device 905 may include a processor 940 and memory 930 coupled to the processor 940, the processor 940 and memory 930 configured to perform various functions described herein.

The communications manager 920 may support wireless communication at a UE in accordance with examples as disclosed herein. For example, the communications manager 920 may be configured as or otherwise support a means for receiving, from a first base station, signaling including configuration information for transmission of measurement reports of reference signals from neighboring base stations that are measured at the UE, where the UE is an aerial UE and the configuration information indicates parameters associated with aerial measurements of the UE, and where the aerial measurements are configured to be obtained in any of a connected mode or an idle mode or an inactive mode at the UE. The communications manager 920 may be configured as or otherwise support a means for measuring the reference signals from the neighboring base stations. The communications manager 920 may be configured as or otherwise support a means for transmitting a measurement report including the measurements of the reference signals and aerial parameters associated with the measurements.

By including or configuring the communications manager 920 in accordance with examples as described herein, the device 905 may support techniques for aerial-based coverage mapping for aerial UEs, which may provide for enhanced determination of coverage maps by height, identification of coverage holes or weak coverage by height, and network management for support of aerial UEs, which may provide for more reliable and efficient communications with aerial UEs.

In some examples, the communications manager 920 may be configured to perform various operations (e.g., receiving, monitoring, transmitting) using or otherwise in cooperation with the transceiver 915, the one or more antennas 925, or any combination thereof. Although the communications manager 920 is illustrated as a separate component, in some examples, one or more functions described with reference to the communications manager 920 may be supported by or performed by the processor 940, the memory 930, the code 935, or any combination thereof. For example, the code 935 may include instructions executable by the processor 940 to cause the device 905 to perform various aspects of aerial coverage mapping for wireless communications with aerial user equipment as described herein, or the processor 940 and the memory 930 may be otherwise configured to perform or support such operations.

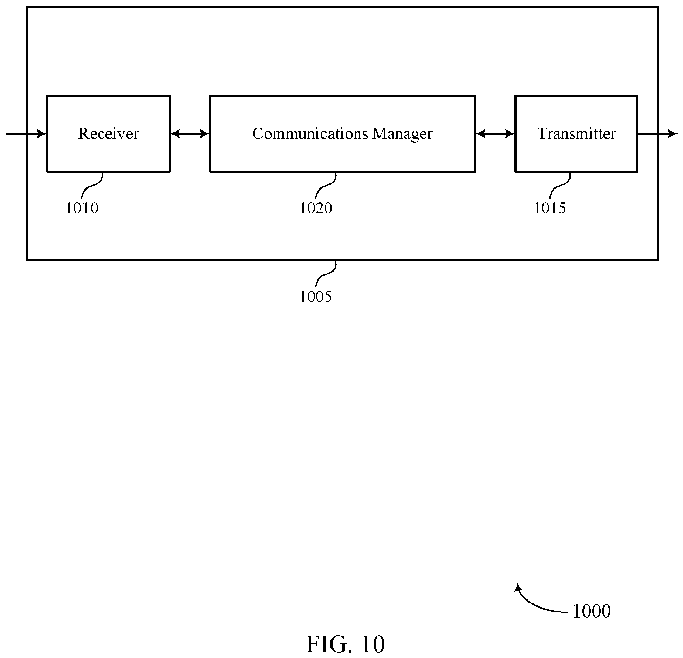

**FIG. 10** shows a block diagram 1000 of a device 1005 that supports aerial coverage mapping for wireless communications with aerial user equipment in accordance with aspects of the present disclosure. The device 1005 may be an example of aspects of a base station 105 as described herein. The device 1005 may include a receiver 1010, a transmitter 1015, and a communications manager 1020. The device 1005 may also include a processor. Each of these components may be in communication with one another (e.g., via one or more buses).

The receiver 1010 may provide a means for receiving information such as packets, user data, control information, or any combination thereof associated with various information channels (e.g., control channels, data channels, information channels related to aerial coverage mapping for wireless communications with aerial user equipment). Information may be passed on to other components of the device 1005. The receiver 1010 may utilize a single antenna or a set of multiple antennas.

The transmitter 1015 may provide a means for transmitting signals generated by other components of the device 1005. For example, the transmitter 1015 may transmit information such as packets, user data, control information, or any combination thereof associated with various information channels (e.g., control channels, data channels, information channels related to aerial coverage mapping for wireless communications with aerial user equipment). In some examples, the transmitter 1015 may be co-located with a receiver 1010 in a transceiver module. The transmitter 1015 may utilize a single antenna or a set of multiple antennas.

The communications manager 1020, the receiver 1010, the transmitter 1015, or various combinations thereof or various components thereof may be examples of means for performing various aspects of aerial coverage mapping for wireless communications with aerial user equipment as described herein. For example, the communications manager 1020, the receiver 1010, the transmitter 1015, or various combinations or components thereof may support a method for performing one or more of the functions described herein.

In some examples, the communications manager 1020, the receiver 1010, the transmitter 1015, or various combinations or components thereof may be implemented in hardware (e.g., in communications management circuitry). The hardware may include a processor, a DSP, an ASIC, an FPGA or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 1020, the receiver 1010, the transmitter 1015, or various combinations or components thereof may be implemented in code (e.g., as communications management software or firmware) executed by a processor. If implemented in code executed by a processor, the functions of the communications manager 1020, the receiver 1010, the transmitter 1015, or various combinations or components thereof may be performed by a general-purpose processor, a DSP, a CPU, an ASIC, an FPGA, or any combination of these or other programmable logic devices (e.g., configured as or otherwise supporting a means for performing the functions described in the present disclosure).

In some examples, the communications manager 1020 may be configured to perform various operations (e.g., receiving, monitoring, transmitting) using or otherwise in cooperation with the receiver 1010, the transmitter 1015, or both. For example, the communications manager 1020 may receive information from the receiver 1010, send information to the transmitter 1015, or be integrated in combination with the receiver 1010, the transmitter 1015, or both to receive information, transmit information, or perform various other operations as described herein.

The communications manager 1020 may support wireless communication at a base station in accordance with examples as disclosed herein. For example, the communications manager 1020 may be configured as or otherwise support a means for transmitting, to a UE, signaling including configuration information for transmission of measurement reports by the UE to indicate measurements of reference signals from neighboring base stations, where the UE is an aerial UE and the configuration information indicates aerial parameters associated with aerial measurements of the UE, and where measurements of the reference signals are configured to be performed during any of a connected mode or an idle mode or an inactive mode at the UE. The communications manager 1020 may be configured as or otherwise support a means for receiving a measurement report from the UE that includes the measurements of the reference signals from the neighboring base stations, where one or more of the measurements have one or more associated aerial parameters.

By including or configuring the communications manager 1020 in accordance with examples as described herein, the device 1005 (e.g., a processor controlling or otherwise coupled to the receiver 1010, the transmitter 1015, the communications manager 1020, or a combination thereof) may support techniques for aerial-based coverage mapping for aerial UEs, which may provide for enhanced determination of coverage maps by height, identification of coverage holes or weak coverage by height, and network management for support of aerial UEs, which may provide for more reliable and efficient communications with aerial UEs.

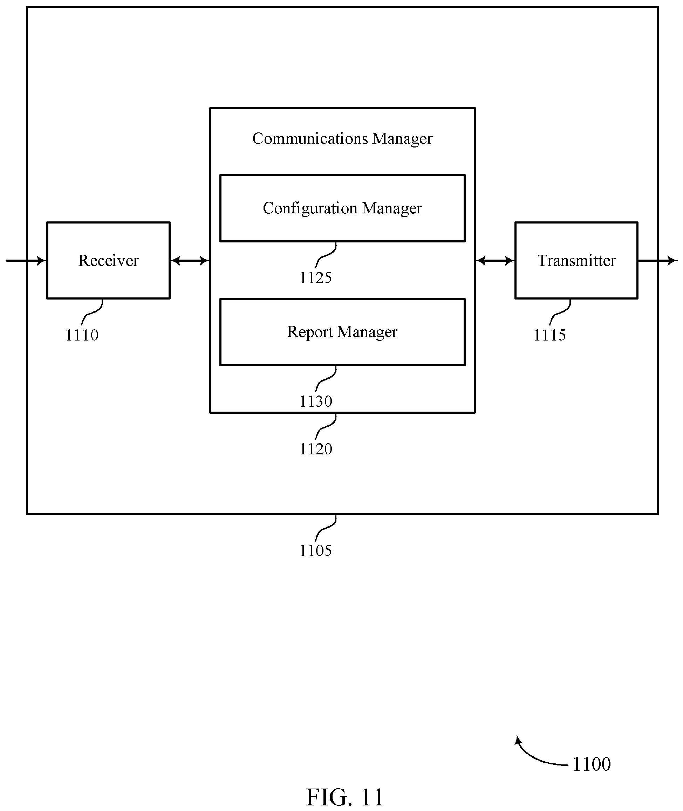

**FIG. 11** shows a block diagram 1100 of a device 1105 that supports aerial coverage mapping for wireless communications with aerial user equipment in accordance with aspects of the present disclosure. The device 1105 may be an example of aspects of a device 1005 or a base station 105 as described herein. The device 1105 may include a receiver 1110, a transmitter 1115, and a communications manager 1120. The device 1105 may also include a processor. Each of these components may be in communication with one another (e.g., via one or more buses).

The receiver 1110 may provide a means for receiving information such as packets, user data, control information, or any combination thereof associated with various information channels (e.g., control channels, data channels, information channels related to aerial coverage mapping for wireless communications with aerial user equipment). Information may be passed on to other components of the device 1105. The receiver 1110 may utilize a single antenna or a set of multiple antennas.

The transmitter 1115 may provide a means for transmitting signals generated by other components of the device 1105. For example, the transmitter 1115 may transmit information such as packets, user data, control information, or any combination thereof associated with various information channels (e.g., control channels, data channels, information channels related to aerial coverage mapping for wireless communications with aerial user equipment). In some examples, the transmitter 1115 may be co-located with a receiver 1110 in a transceiver module. The transmitter 1115 may utilize a single antenna or a set of multiple antennas.

The device 1105, or various components thereof, may be an example of means for performing various aspects of aerial coverage mapping for wireless communications with aerial user equipment as described herein. For example, the communications manager 1120 may include a configuration manager 1125 a report manager 1130, or any combination thereof. The communications manager 1120 may be an example of aspects of a communications manager 1020 as described herein. In some examples, the communications manager 1120, or various components thereof, may be configured to perform various operations (e.g., receiving, monitoring, transmitting) using or otherwise in cooperation with the receiver 1110, the transmitter 1115, or both. For example, the communications manager 1120 may receive information from the receiver 1110, send information to the transmitter 1115, or be integrated in combination with the receiver 1110, the transmitter 1115, or both to receive information, transmit information, or perform various other operations as described herein.

The communications manager 1120 may support wireless communication at a base station in accordance with examples as disclosed herein. The configuration manager 1125 may be configured as or otherwise support a means for transmitting, to a UE, signaling including configuration information for transmission of measurement reports by the UE to indicate measurements of reference signals from neighboring base stations, where the UE is an aerial UE and the configuration information indicates aerial parameters associated with aerial measurements of the UE, and where measurements of the reference signals are configured to be performed during any of a connected mode or an idle mode or an inactive mode at the UE. The report manager 1130 may be configured as or otherwise support a means for receiving a measurement report from the UE that includes the measurements of the reference signals from the neighboring base stations, where one or more of the measurements have one or more associated aerial parameters.

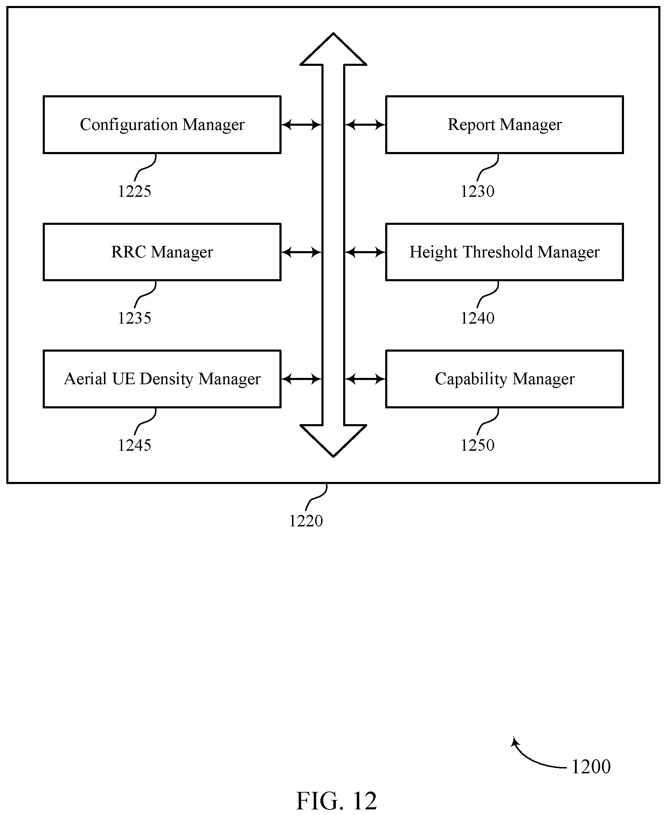

**FIG. 12** shows a block diagram 1200 of a communications manager 1220 that supports aerial coverage mapping for wireless communications with aerial user equipment in accordance with aspects of the present disclosure. The communications manager 1220 may be an example of aspects of a communications manager 1020, a communications manager 1120, or both, as described herein. The communications manager 1220, or various components thereof, may be an example of means for performing various aspects of aerial coverage mapping for wireless communications with aerial user equipment as described herein. For example, the communications manager 1220 may include a configuration manager 1225, a report manager 1230, an RRC manager 1235, a height threshold manager 1240, an aerial UE density manager 1245, a capability manager 1250, or any combination thereof. Each of these components may communicate, directly or indirectly, with one another (e.g., via one or more buses).

The communications manager 1220 may support wireless communication at a base station in accordance with examples as disclosed herein. The configuration manager 1225 may be configured as or otherwise support a means for transmitting, to a UE, signaling including configuration information for transmission of measurement reports by the UE to indicate measurements of reference signals from neighboring base stations, where the UE is an aerial UE and the configuration information indicates aerial parameters associated with aerial measurements of the UE, and where measurements of the reference signals are configured to be performed during any of a connected mode or an idle mode or an inactive mode at the UE. The report manager 1230 may be configured as or otherwise support a means for receiving a measurement report from the UE that includes the measurements of the reference signals from the neighboring base stations, where one or more of the measurements have one or more associated aerial parameters. In some examples, the measurement report further includes one or more characteristics associated with a hardware configuration of the UE.

In some examples, to support transmitting, the RRC manager 1235 may be configured as or otherwise support a means for transmitting radio resource configuration (RRC) signaling to the UE that configures at least one aerial-type measurement report that is separate from measurement reports provided by a ground-based UE.

In some examples, the configuration manager 1225 may be configured as or otherwise support a means for configuring a maximum number of base stations to be measured by the UE when in an aerial state, a total number of base stations to be measured by the UE when in the aerial state and a non-aerial state, or any combinations thereof. In some examples, the one or more aerial parameters include a height of the UE associated with the measurements of the one or more reference signals from the one or more neighboring base stations. In some examples, the reference signals are measured responsive to a trigger event associated with the UE. In some examples, the trigger event is a height of the UE that is at or above a configured height threshold or that is within a configured range of heights.

In some examples, the aerial UE density manager 1245 may be configured as or otherwise support a means for receiving, from the UE, a number of other aerial UEs within a predetermined range of the UE, where the number of other aerial UEs is provided with the measurement report or separately from the measurement report. In some examples, the measurement report further includes an indication of whether reported measurements were obtained by the UE when in an aerial state or in a ground state.

In some examples, the capability manager 1250 may be configured as or otherwise support a means for receiving, from the UE, a capability message that indicates the UE has an aerial capability, indicates capabilities to provide different types of measurement reports to the base station, or any combinations thereof.

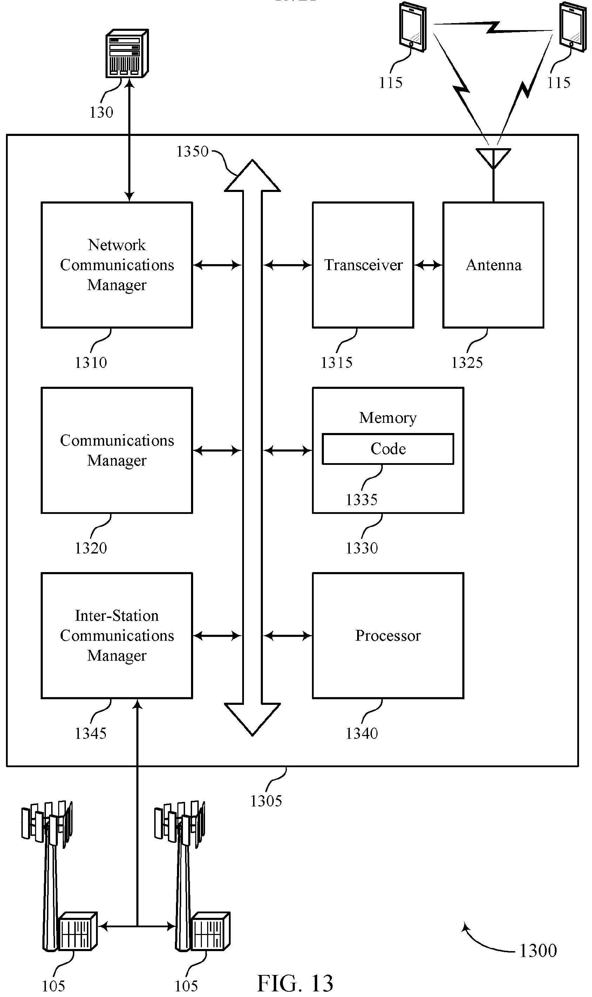

**FIG. 13** shows a diagram of a system 1300 including a device 1305 that supports aerial coverage mapping for wireless communications with aerial user equipment in accordance with aspects of the present disclosure. The device 1305 may be an example of or include the components of a device 1005, a device 1105, or a base station 105 as described herein. The device 1305 may communicate wirelessly with one or more base stations 105, UEs 115, or any combination thereof. The device 1305 may include components for bi-directional voice and data communications including components for transmitting and receiving communications, such as a communications manager 1320, a network communications manager 1310, a transceiver 1315, an antenna 1325, a memory 1330, code 1335, a processor 1340, and an inter-station communications manager 1345. These components may be in electronic communication or otherwise coupled (e.g., operatively, communicatively, functionally, electronically, electrically) via one or more buses (e.g., a bus 1350).

The network communications manager 1310 may manage communications with a core network 130 (e.g., via one or more wired backhaul links). For example, the network communications manager 1310 may manage the transfer of data communications for client devices, such as one or more UEs 115.

In some cases, the device 1305 may include a single antenna 1325. However, in some other cases the device 1305 may have more than one antenna 1325, which may be capable of concurrently transmitting or receiving multiple wireless transmissions. The transceiver 1315 may communicate bi-directionally, via the one or more antennas 1325, wired, or wireless links as described herein. For example, the transceiver 1315 may represent a wireless transceiver and may communicate bi-directionally with another wireless transceiver. The transceiver 1315 may also include a modem to modulate the packets, to provide the modulated packets to one or more antennas 1325 for transmission, and to demodulate packets received from the one or more antennas 1325. The transceiver 1315, or the transceiver 1315 and one or more antennas 1325, may be an example of a transmitter 1015, a transmitter 1115, a receiver 1010, a receiver 1110, or any combination thereof or component thereof, as described herein.

The memory 1330 may include RAM and ROM. The memory 1330 may store computer-readable, computer-executable code 1335 including instructions that, when executed by the processor 1340, cause the device 1305 to perform various functions described herein. The code 1335 may be stored in a non-transitory computer-readable medium such as system memory or another type of memory. In some cases, the code 1335 may not be directly executable by the processor 1340 but may cause a computer (e.g., when compiled and executed) to perform functions described herein. In some cases, the memory 1330 may contain, among other things, a BIOS which may control basic hardware or software operation such as the interaction with peripheral components or devices.

The processor 1340 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1340 may be configured to operate a memory array using a memory controller. In some other cases, a memory controller may be integrated into the processor 1340. The processor 1340 may be configured to execute computer-readable instructions stored in a memory (e.g., the memory 1330) to cause the device 1305 to perform various functions (e.g., functions or tasks supporting aerial coverage mapping for wireless communications with aerial user equipment). For example, the device 1305 or a component of the device 1305 may include a processor 1340 and memory 1330 coupled to the processor 1340, the processor 1340 and memory 1330 configured to perform various functions described herein.

The inter-station communications manager 1345 may manage communications with other base stations 105, and may include a controller or scheduler for controlling communications with UEs 115 in cooperation with other base stations 105. For example, the inter-station communications manager 1345 may coordinate scheduling for transmissions to UEs 115 for various interference mitigation techniques such as beamforming or joint transmission. In some examples, the inter-station communications manager 1345 may provide an X2 interface within an LTE/LTE-A wireless communications network technology to provide communication between base stations 105.

The communications manager 1320 may support wireless communication at a base station in accordance with examples as disclosed herein. For example, the communications manager 1320 may be configured as or otherwise support a means for transmitting, to a UE, signaling including configuration information for transmission of measurement reports by the UE to indicate measurements of reference signals from neighboring base stations, where the UE is an aerial UE and the configuration information indicates aerial parameters associated with aerial measurements of the UE, and where measurements of the reference signals are configured to be performed during any of a connected mode or an idle mode or an inactive mode at the UE. The communications manager 1320 may be configured as or otherwise support a means for receiving a measurement report from the UE that includes the measurements of the reference signals from the neighboring base stations, where one or more of the measurements have one or more associated aerial parameters.

By including or configuring the communications manager 1320 in accordance with examples as described herein, the device 1305 may support techniques for aerial-based coverage mapping for aerial UEs, which may provide for enhanced determination of coverage maps by height, identification of coverage holes or weak coverage by height, and network management for support of aerial UEs, which may provide for more reliable and efficient communications with aerial UEs.

In some examples, the communications manager 1320 may be configured to perform various operations (e.g., receiving, monitoring, transmitting) using or otherwise in cooperation with the transceiver 1315, the one or more antennas 1325, or any combination thereof. Although the communications manager 1320 is illustrated as a separate component, in some examples, one or more functions described with reference to the communications manager 1320 may be supported by or performed by the processor 1340, the memory 1330, the code 1335, or any combination thereof. For example, the code 1335 may include instructions executable by the processor 1340 to cause the device 1305 to perform various aspects of aerial coverage mapping for wireless communications with aerial user equipment as described herein, or the processor 1340 and the memory 1330 may be otherwise configured to perform or support such operations.

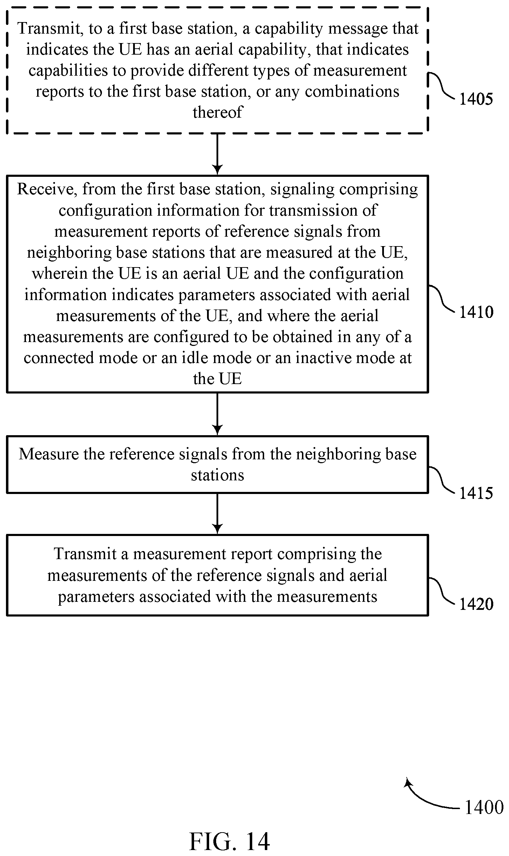

**FIG. 14** shows a flowchart illustrating a method 1400 that supports aerial coverage mapping for wireless communications with aerial user equipment in accordance with aspects of the present disclosure. The operations of the method 1400 may be implemented by a UE or its components as described herein. For example, the operations of the method 1400 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

Optionally, at 1405, the method may include transmitting, to a first base station, a capability message that indicates the UE has an aerial capability, that indicates capabilities to provide different types of measurement reports to the first base station, or any combinations thereof. The operations of 1405 may be performed in accordance with examples as disclosed herein. In some examples, aspects of the operations of 1405 may be performed by a capability manager 855 as described with reference to FIG. 8.

At 1410, the method may include receiving, from the first base station, signaling including configuration information for transmission of measurement reports of reference signals from neighboring base stations that are measured at the UE, where the UE is an aerial UE and the configuration information indicates parameters associated with aerial measurements of the UE, and where the aerial measurements are configured to be obtained in any of a connected mode or an idle mode or an inactive mode at the UE. The operations of 1410 may be performed in accordance with examples as disclosed herein. In some examples, aspects of the operations of 1410 may be performed by a configuration manager 825 as described with reference to FIG. 8.

At 1415, the method may include measuring the reference signals from the neighboring base stations. The operations of 1415 may be performed in accordance with examples as disclosed herein. In some examples, aspects of the operations of 1415 may be performed by a measurement manager 830 as described with reference to FIG. 8.

At 1420, the method may include transmitting a measurement report including the measurements of the reference signals and aerial parameters associated with the measurements. The operations of 1420 may be performed in accordance with examples as disclosed herein. In some examples, aspects of the operations of 1420 may be performed by a report manager 835 as described with reference to FIG. 8.

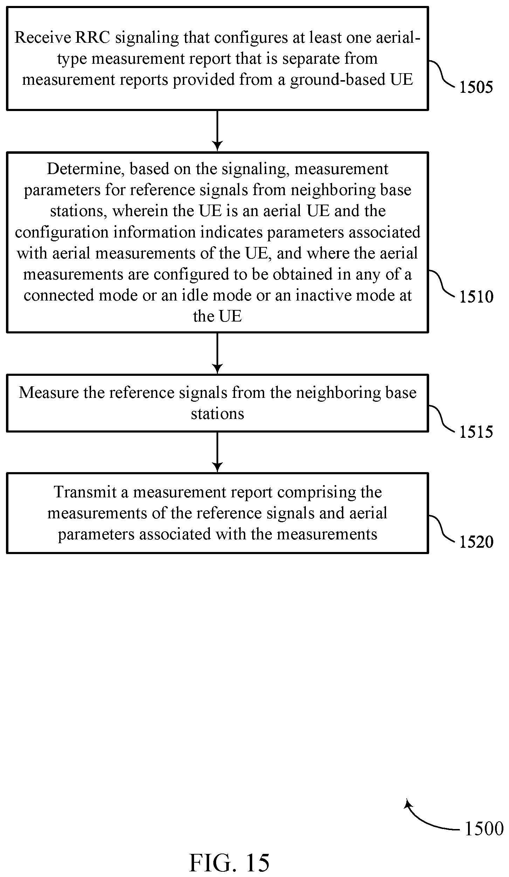

**FIG. 15** shows a flowchart illustrating a method 1500 that supports aerial coverage mapping for wireless communications with aerial user equipment in accordance with aspects of the present disclosure. The operations of the method 1500 may be implemented by a UE or its components as described herein. For example, the operations of the method 1500 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1505, the method may include receiving RRC signaling that configures at least one aerial-type measurement report that is separate from measurement reports provided from a ground-based UE. The operations of 1505 may be performed in accordance with examples as disclosed herein. In some examples, aspects of the operations of 1505 may be performed by an RRC manager 840 as described with reference to FIG. 8.

At 1510, the method may include determining, based on the signaling, measurement parameters for reference signals from neighboring base stations, where the UE is an aerial UE and the configuration information indicates parameters associated with aerial measurements of the UE, and where the aerial measurements are configured to be obtained in any of a connected mode or an idle mode or an inactive mode at the UE. The operations of 1510 may be performed in accordance with examples as disclosed herein. In some examples, aspects of the operations of 1510 may be performed by a configuration manager 825 as described with reference to FIG. 8.

At 1515, the method may include measuring the reference signals from the neighboring base stations. The operations of 1515 may be performed in accordance with examples as disclosed herein. In some examples, aspects of the operations of 1515 may be performed by a measurement manager 830 as described with reference to FIG. 8.

At 1520, the method may include transmitting a measurement report including the measurements of the reference signals and aerial parameters associated with the measurements. The operations of 1520 may be performed in accordance with examples as disclosed herein. In some examples, aspects of the operations of 1520 may be performed by a report manager 835 as described with reference to FIG. 8.

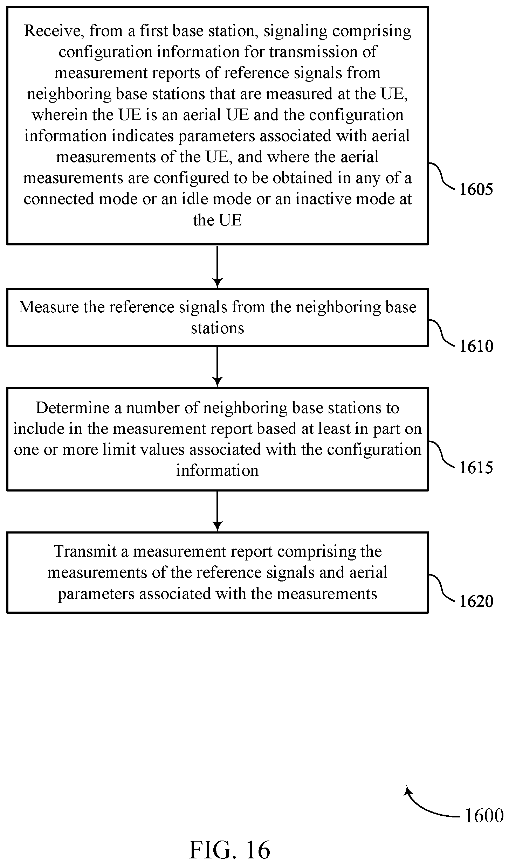

**FIG. 16** shows a flowchart illustrating a method 1600 that supports aerial coverage mapping for wireless communications with aerial user equipment in accordance with aspects of the present disclosure. The operations of the method 1600 may be implemented by a UE or its components as described herein. For example, the operations of the method 1600 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1605, the method may include receiving, from a first base station, signaling including configuration information for transmission of measurement reports of reference signals from neighboring base stations that are measured at the UE, where the UE is an aerial UE and the configuration information indicates parameters associated with aerial measurements of the UE. The operations of 1605 may be performed in accordance with examples as disclosed herein. In some examples, aspects of the operations of 1605 may be performed by a configuration manager 825 as described with reference to FIG. 8.

At 1610, the method may include measuring the reference signals from the neighboring base stations. The operations of 1610 may be performed in accordance with examples as disclosed herein. In some examples, aspects of the operations of 1610 may be performed by a measurement manager 830 as described with reference to FIG. 8.

At 1615, the method may include determining a number of neighboring base stations to include in the measurement report based on one or more limit values associated with the configuration information. The operations of 1615 may be performed in accordance with examples as disclosed herein. In some examples, aspects of the operations of 1615 may be performed by a measurement manager 830 as described with reference to FIG. 8.

At 1620, the method may include transmitting a measurement report including the measurements of the reference signals and aerial parameters associated with the measurements. The operations of 1620 may be performed in accordance with examples as disclosed herein. In some examples, aspects of the operations of 1620 may be performed by a report manager 835 as described with reference to FIG. 8.

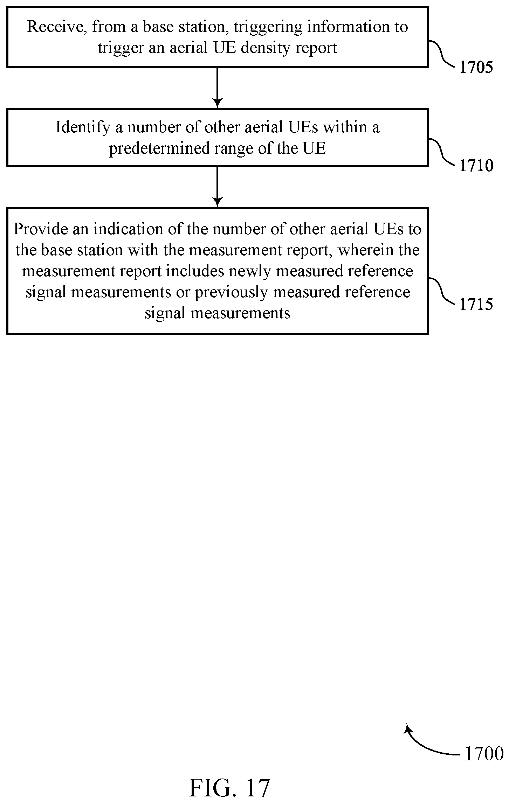

**FIG. 17** shows a flowchart illustrating a method 1700 that supports aerial coverage mapping for wireless communications with aerial user equipment in accordance with aspects of the present disclosure. The operations of the method 1700 may be implemented by a UE or its components as described herein. For example, the operations of the method 1700 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1705, the method may include receiving, from a first base station, triggering information to trigger an aerial UE density report. The operations of 1705 may be performed in accordance with examples as disclosed herein. In some examples, aspects of the operations of 1705 may be performed by an aerial UE density manager 850 as described with reference to FIG. 8.

At 1710, the method may include identifying a number of other aerial UEs within a predetermined range of the UE. The operations of 1710 may be performed in accordance with examples as disclosed herein. In some examples, aspects of the operations of 1710 may be performed by an aerial UE density manager 850 as described with reference to FIG. 8.

At 1715, the method may include providing an indication of the number of other aerial UEs to the base station with the measurement report, where the measurement report includes newly measured reference signal measurements or previously measured reference signal measurements. The operations of 1715 may be performed in accordance with examples as disclosed herein. In some examples, aspects of the operations of 1715 may be performed by an aerial UE density manager 850 as described with reference to FIG. 8.

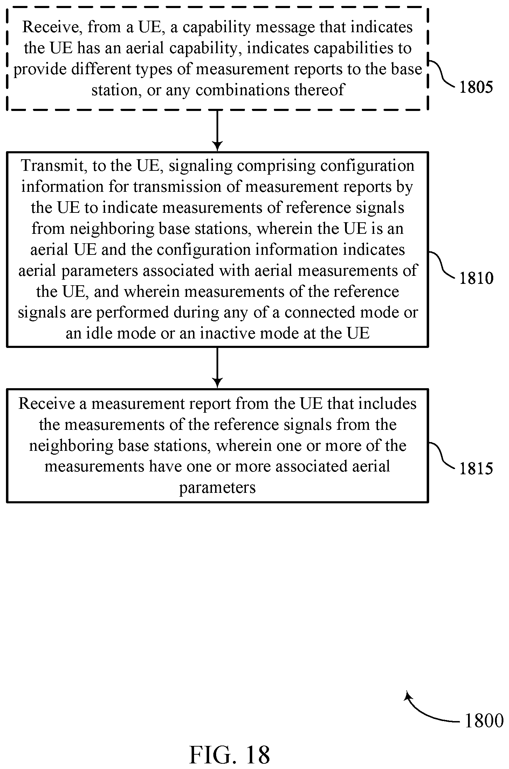

**FIG. 18** shows a flowchart illustrating a method 1800 that supports aerial coverage mapping for wireless communications with aerial user equipment in accordance with aspects of the present disclosure. The operations of the method 1800 may be implemented by a base station or its components as described herein. For example, the operations of the method 1800 may be performed by a base station 105 as described with reference to FIGs. 1 through 5 and 10 through 13. In some examples, a base station may execute a set of instructions to control the functional elements of the base station to perform the described functions. Additionally or alternatively, the base station may perform aspects of the described functions using special-purpose hardware.

Optionally, at 1805, the method may include receiving, from the UE, a capability message that indicates the UE has an aerial capability, indicates capabilities to provide different types of measurement reports to the base station, or any combinations thereof. The operations of 1805 may be performed in accordance with examples as disclosed herein. In some examples, aspects of the operations of 1805 may be performed by a capability manager 1250 as described with reference to FIG. 12.

At 1810, the method may include transmitting, to the UE, signaling including configuration information for transmission of measurement reports by the UE to indicate measurements of reference signals from neighboring base stations, where the UE is an aerial UE and the configuration information indicates aerial parameters associated with aerial measurements of the UE, and where measurements of the reference signals are performed during any of a connected mode or an idle mode or an inactive mode at the UE. The operations of 1810 may be performed in accordance with examples as disclosed herein. In some examples, aspects of the operations of 1810 may be performed by a configuration manager 1225 as described with reference to FIG. 12.

At 1815, the method may include receiving a measurement report from the UE that includes the measurements of the reference signals from the neighboring base stations, where one or more of the measurements have one or more associated aerial parameters. The operations of 1815 may be performed in accordance with examples as disclosed herein. In some examples, aspects of the operations of 1815 may be performed by a report manager 1230 as described with reference to FIG. 12.

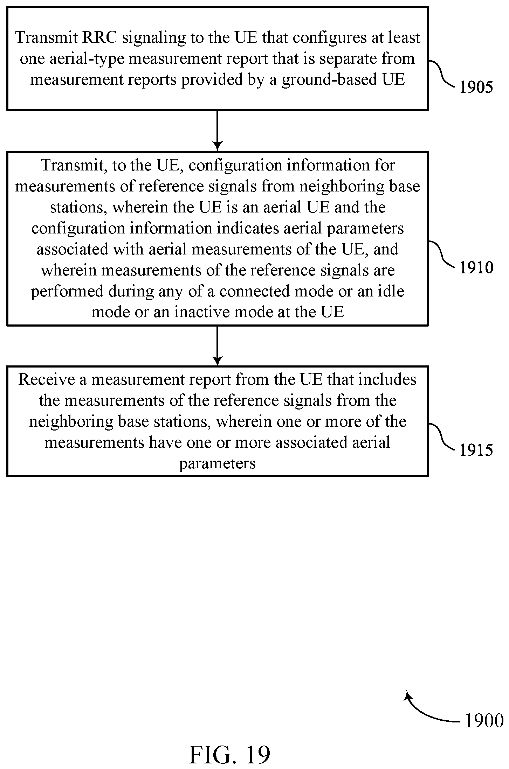

**FIG. 19** shows a flowchart illustrating a method 1900 that supports aerial coverage mapping for wireless communications with aerial user equipment in accordance with aspects of the present disclosure. The operations of the method 1900 may be implemented by a base station or its components as described herein. For example, the operations of the method 1900 may be performed by a base station 105 as described with reference to FIGs. 1 through 5 and 10 through 13. In some examples, a base station may execute a set of instructions to control the functional elements of the base station to perform the described functions. Additionally or alternatively, the base station may perform aspects of the described functions using special-purpose hardware.

At 1905, the method may include transmitting RRC signaling to the UE that configures at least one aerial-type measurement report that is separate from measurement reports provided by a ground-based UE. The operations of 1905 may be performed in accordance with examples as disclosed herein. In some examples, aspects of the operations of 1905 may be performed by an RRC manager 1235 as described with reference to FIG. 12.

At 1910, the method may include transmitting, to the UE, configuration information for measurements of reference signals from neighboring base stations, where the UE is an aerial UE and the configuration information indicates aerial parameters associated with aerial measurements of the UE, and where measurements of the reference signals are performed during any of a connected mode or an idle mode or an inactive mode at the UE. The operations of 1910 may be performed in accordance with examples as disclosed herein. In some examples, aspects of the operations of 1910 may be performed by a configuration manager 1225 as described with reference to FIG. 12.

At 1915, the method may include receiving a measurement report from the UE that includes the measurements of the reference signals from the neighboring base stations, where one or more of the measurements have one or more associated aerial parameters. The operations of 1915 may be performed in accordance with examples as disclosed herein. In some examples, aspects of the operations of 1915 may be performed by a report manager 1230 as described with reference to FIG. 12.

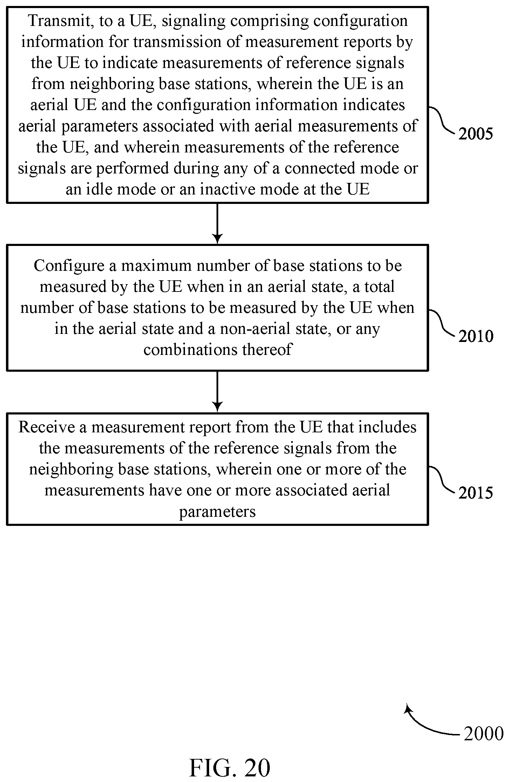

**FIG. 20** shows a flowchart illustrating a method 2000 that supports aerial coverage mapping for wireless communications with aerial user equipment in accordance with aspects of the present disclosure. The operations of the method 2000 may be implemented by a base station or its components as described herein. For example, the operations of the method 2000 may be performed by a base station 105 as described with reference to FIGs. 1 through 5 and 10 through 13. In some examples, a base station may execute a set of instructions to control the functional elements of the base station to perform the described functions. Additionally or alternatively, the base station may perform aspects of the described functions using special-purpose hardware.

At 2005, the method may include transmitting, to a UE, signaling including configuration information for transmission of measurement reports by the UE to indicate measurements of reference signals from neighboring base stations, where the UE is an aerial UE and the configuration information indicates aerial parameters associated with aerial measurements of the UE, and where measurements of the reference signals are configured to be performed during any of a connected mode or an idle mode or an inactive mode at the UE. The operations of 2005 may be performed in accordance with examples as disclosed herein. In some examples, aspects of the operations of 2005 may be performed by a configuration manager 1225 as described with reference to FIG. 12.

At 2010, the method may include configuring a maximum number of base stations to be measured by the UE when in an aerial state, a total number of base stations to be measured by the UE when in the aerial state and a non-aerial state, or any combinations thereof. The operations of 2010 may be performed in accordance with examples as disclosed herein. In some examples, aspects of the operations of 2010 may be performed by a configuration manager 1225 as described with reference to FIG. 12.

At 2015, the method may include receiving a measurement report from the UE that includes the measurements of the reference signals from the neighboring base stations, where one or more of the measurements have one or more associated aerial parameters. The operations of 2015 may be performed in accordance with examples as disclosed herein. In some examples, aspects of the operations of 2015 may be performed by a report manager 1230 as described with reference to FIG. 12.

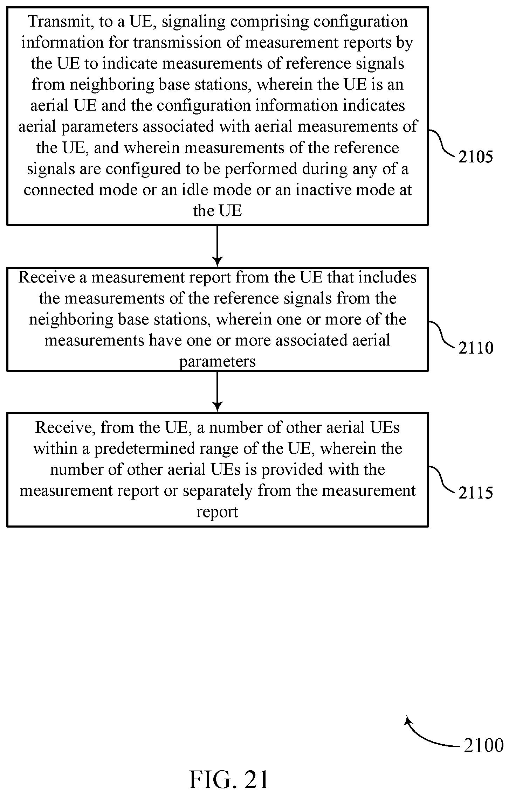

**FIG. 21** shows a flowchart illustrating a method 2100 that supports aerial coverage mapping for wireless communications with aerial user equipment in accordance with aspects of the present disclosure. The operations of the method 2100 may be implemented by a base station or its components as described herein. For example, the operations of the method 2100 may be performed by a base station 105 as described with reference to FIGs. 1 through 5 and 10 through 13. In some examples, a base station may execute a set of instructions to control the functional elements of the base station to perform the described functions. Additionally or alternatively, the base station may perform aspects of the described functions using special-purpose hardware.

At 2105, the method may include transmitting, to a UE, signaling including configuration information for transmission of measurement reports by the UE to indicate measurements of reference signals from neighboring base stations, where the UE is an aerial UE and the configuration information indicates aerial parameters associated with aerial measurements of the UE, and where measurements of the reference signals are configured to be performed during any of a connected mode or an idle mode or an inactive mode at the UE. The operations of 2105 may be performed in accordance with examples as disclosed herein. In some examples, aspects of the operations of 2105 may be performed by a configuration manager 1225 as described with reference to FIG. 12.

At 2110, the method may include receiving a measurement report from the UE that includes the measurements of the reference signals from the neighboring base stations, where one or more of the measurements have one or more associated aerial parameters. The operations of 2110 may be performed in accordance with examples as disclosed herein. In some examples, aspects of the operations of 2110 may be performed by a report manager 1230 as described with reference to FIG. 12.

At 2115, the method may include receiving, from the UE, a number of other aerial UEs within a predetermined range of the UE, where the number of other aerial UEs is provided with the measurement report or separately from the measurement report. The operations of 2115 may be performed in accordance with examples as disclosed herein. In some examples, aspects of the operations of 2115 may be performed by an aerial UE density manager 1245 as described with reference to FIG. 12.

The following provides an overview of aspects of the present disclosure:
Aspect 1: A method for wireless communication at a UE, comprising: receiving, from a first base station, signaling comprising configuration information for transmission of measurement reports of reference signals from neighboring base stations that are measured at the UE, wherein the UE is an aerial UE and the configuration information indicates parameters associated with aerial measurements of the UE, and wherein the aerial measurements are configured to be obtained in any of a connected mode or an idle mode or an inactive mode at the UE; measuring the reference signals from the neighboring base stations; and transmitting a measurement report comprising the measurements of the reference signals and aerial parameters associated with the measurements.
Aspect 2: The method of aspect 1, wherein the measurement report further includes one or more characteristics associated with a hardware configuration of the UE.
Aspect 3: The method of aspect 2, wherein the one or more characteristics include an antenna type of the UE, an aerial UE type of the UE, or any combinations thereof.
Aspect 4: The method of any of aspects 1 through 3, wherein the receiving comprises: receiving radio resource configuration (RRC) signaling that configures at least one aerial-type measurement report that is separate from measurement reports provided from a ground-based UE.
Aspect 5: The method of any of aspects 1 through 4, further comprising: determining a number of neighboring base stations to include in the measurement report based at least in part on one or more limit values associated with the configuration information.
Aspect 6: The method of aspect 5, wherein the number of neighboring base stations is limited to a configured maximum number of base stations measured when in an aerial state, a configured total number of base stations measured when in the aerial state and a non-aerial state, or any combinations thereof.
Aspect 7: The method of any of aspects 5 through 6, wherein the number of neighboring base stations to include in the measurement report corresponds to an amount of base stations having a measurement value that triggers the UE to log the measurement.
Aspect 8: The method of any of aspects 1 through 7, wherein the aerial parameters include a height of the UE associated with the measurements of the reference signals from the neighboring base stations.
Aspect 9: The method of any of aspects 1 through 8, wherein the measuring the reference signals is performed responsive to a trigger event associated with the UE.
Aspect 10: The method of aspect 9, wherein the trigger event is a height of the UE that is at or above a configured lower height threshold or that is at or below a configured upper height threshold or that is within a configured range of heights.
Aspect 11: The method of aspect 10, wherein a separate height measurement of the UE is implicitly indicated based on the trigger event.
Aspect 12: The method of any of aspects 1 through 11, further comprising: identifying a number of other aerial UEs within a predetermined range of the UE; and providing an indication of the number of other aerial UEs to the base station with the measurement report, wherein the measurement report includes newly measured reference signal measurements or previously measured reference signal measurements.
Aspect 13: The method of any of aspects 1 through 12, wherein the measurement report further includes an indication of whether reported measurements were obtained by the UE when in an aerial state or in a ground state.
Aspect 14: The method of any of aspects 1 through 13, further comprising: transmitting, to the first base station, a capability message that indicates the UE has an aerial capability, that indicates capabilities to provide different types of measurement reports to the first base station, or any combinations thereof.
Aspect 15: A method for wireless communication at a base station, comprising: transmitting, to a UE, signaling comprising configuration information for transmission of measurement reports by the UE to indicate measurements of reference signals from neighboring base stations, wherein the UE is an aerial UE and the configuration information indicates aerial parameters associated with aerial measurements of the UE, and wherein measurements of the reference signals are configured to be performed during any of a connected mode or an idle mode or an inactive mode at the UE; and receiving a measurement report from the UE that includes the measurements of the reference signals from the neighboring base stations, wherein one or more of the measurements have one or more associated aerial parameters.
Aspect 16: The method of aspect 15, wherein the measurement report further includes one or more characteristics associated with a hardware configuration of the UE.
Aspect 17: The method of any of aspects 15 through 16, wherein the transmitting comprises: transmitting radio resource configuration (RRC) signaling to the UE that configures at least one aerial-type measurement report that is separate from measurement reports provided by a ground-based UE.
Aspect 18: The method of any of aspects 15 through 17, further comprising: configuring a maximum number of base stations to be measured by the UE when in an aerial state, a total number of base stations to be measured by the UE when in the aerial state and a non-aerial state, or any combinations thereof.
Aspect 19: The method of any of aspects 15 through 18, wherein the one or more aerial parameters include a height of the UE associated with the measurements of the one or more reference signals from the one or more neighboring base stations.
Aspect 20: The method of any of aspects 15 through 19, wherein the reference signals are measured responsive to a trigger event associated with the UE.
Aspect 21: The method of aspect 20, wherein the trigger event is a height of the UE that is at or above a configured lower height threshold or that is at or below a configured upper height threshold or that is within a configured range of heights.
Aspect 22: The method of any of aspects 15 through 21, further comprising: receiving, from the UE, a number of other aerial UEs within a predetermined range of the UE, wherein the number of other aerial UEs is provided with the measurement report or separately from the measurement report.
Aspect 23: The method of any of aspects 15 through 22, wherein the measurement report further includes an indication of whether reported measurements were obtained by the UE when in an aerial state or in a ground state.
Aspect 24: The method of any of aspects 15 through 23, further comprising: receiving, from the UE, a capability message that indicates the UE has an aerial capability, indicates capabilities to provide different types of measurement reports to the base station, or any combinations thereof.
Aspect 25: An apparatus for wireless communication at a UE, comprising a processor; memory coupled with the processor; and instructions stored in the memory and executable by the processor to cause the apparatus to perform a method of any of aspects 1 through 14.
Aspect 26: An apparatus for wireless communication at a UE, comprising at least one means for performing a method of any of aspects 1 through 14.
Aspect 27: A non-transitory computer-readable medium storing code for wireless communication at a UE, the code comprising instructions executable by a processor to perform a method of any of aspects 1 through 14.
Aspect 28: An apparatus for wireless communication at a base station, comprising a processor; memory coupled with the processor; and instructions stored in the memory and executable by the processor to cause the apparatus to perform a method of any of aspects 15 through 24.
Aspect 29: An apparatus for wireless communication at a base station, comprising at least one means for performing a method of any of aspects 15 through 24.
Aspect 30: A non-transitory computer-readable medium storing code for wireless communication at a base station, the code comprising instructions executable by a processor to perform a method of any of aspects 15 through 24.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as NB-IoT, Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure as defined by the appended set of claims.

## Claims

1. An apparatus for wireless communication at a user equipment, UE, the apparatus comprising:
means for receiving (505), from a first base station, signaling comprising configuration information for transmission of measurement reports of reference signals from neighboring base stations that are measured at the UE, wherein the UE is an aerial UE and the configuration information indicates parameters associated with aerial measurements of the UE, wherein the aerial parameters include a height of the UE associated with the measurements of the reference signals from the neighboring base stations, and wherein the aerial measurements are configured to be obtained in any of a connected mode or an idle mode or an inactive mode at the UE;
means for measuring (525) the reference signals from the neighboring base stations;
means for identifying (540) a number of other aerial UEs within a predetermined range of the UE;
means for transmitting (530) a measurement report comprising measurements of the reference signals and aerial parameters associated with the measurements; and
means for providing (545) an indication of the number of other aerial UEs to the first base station with the measurement report, wherein the measurement report includes newly measured reference signal measurements or previously measured reference signal measurement.

2. The apparatus of claim 1, wherein the measurement report further includes one or more characteristics associated with a hardware configuration of the UE.

3. The apparatus of claim 2, wherein the one or more characteristics include an antenna type of the UE, an aerial UE type of the UE, or any combinations thereof.

4. The apparatus of claim 1, further comprising:
means for receiving radio resource configuration, RRC, signaling that configures at least one aerial-type measurement report that is separate from measurement reports provided from a ground-based UE.

5. The apparatus of claim 1, further comprising:
means for determining a number of neighboring base stations to include in the measurement report based at least in part on one or more limit values associated with the configuration information.

6. The apparatus of claim 5, wherein the number of neighboring base stations is limited to a configured maximum number of base stations measured when in an aerial state, a configured total number of base stations measured when in the aerial state and a non-aerial state, or any combinations thereof.

7. The apparatus of claim 5, wherein the number of neighboring base stations to include in the measurement report corresponds to an amount of base stations having a measurement value that triggers the UE to log the measurement.

8. The apparatus of claim 1, wherein the measuring the reference signals is performed responsive to a trigger event associated with the UE.

9. The apparatus of claim 8, wherein the trigger event is the height of the UE that is at or above a configured lower height threshold or that is at or below a configured upper height threshold or that is within a configured range of heights.

10. The apparatus of claim 9, wherein a separate height measurement of the UE is implicitly indicated based on the trigger event.

11. The apparatus of claim 1, wherein the measurement report further includes an indication of whether reported measurements were obtained by the UE when in an aerial state or in a ground state.

12. The apparatus of claim 1, further comprising:
means for transmitting, to the first base station, a capability message that indicates the UE has an aerial capability, that indicates capabilities to provide different types of measurement reports to the first base station, or any combinations thereof.

13. An apparatus for wireless communication at a base station, the apparatus comprising:
means for transmitting (505), to a user equipment, UE, signaling comprising configuration information for transmission of measurement reports by the UE to indicate measurements of reference signals from neighboring base stations, wherein the UE is an aerial UE and the configuration information indicates aerial parameters associated with aerial measurements of the UE, wherein the aerial parameters include a height of the UE associated with the measurements of the reference signals from the neighboring base stations, and wherein measurements of the reference signals are configured to be performed during any of a connected mode or an idle mode or an inactive mode at the UE;
means for receiving (530) a measurement report from the UE that includes the measurements of the reference signals from the neighboring base stations, wherein one or more of the measurements have one or more associated aerial parameters; and
means for receiving (545), from the UE, an indication of a number of other aerial UEs within a predetermined range of the UE, wherein the number of other aerial UEs is provided with the measurement report or separately from the measurement report.

14. A method for wireless communication at a user equipment, UE, the method comprising:
receiving (505), from a first base station, signaling comprising configuration information for transmission of measurement reports of reference signals from neighboring base stations that are measured at the UE, wherein the UE is an aerial UE and the configuration information indicates parameters associated with aerial measurements of the UE, wherein the aerial parameters include a height of the UE associated with the measurements of the reference signals from the neighboring base stations, and wherein the aerial measurements are configured to be obtained in any of a connected mode or an idle mode or an inactive mode at the UE;
measuring (525) the reference signals from the neighboring base stations;
identifying (540) a number of other aerial UEs within a predetermined range of the UE;
transmitting (530) a measurement report comprising measurements of the reference signals and aerial parameters associated with the measurements; and
providing (545) an indication of the number of other aerial UEs to the first base station with the measurement report, wherein the measurement report includes newly measured reference signal measurements or previously measured reference signal measurement.

15. A method for wireless communication at a base station, the method comprising:
transmitting (505), to a user equipment ,UE, signaling comprising configuration information for transmission of measurement reports by the UE to indicate measurements of reference signals from neighboring base stations, wherein the UE is an aerial UE and the configuration information indicates aerial parameters associated with aerial measurements of the UE, wherein the aerial parameters include a height of the UE associated with the measurements of the reference signals from the neighboring base stations, and wherein measurements of the reference signals are configured to be performed during any of a connected mode or an idle mode or an inactive mode at the UE;
receiving (530) a measurement report from the UE that includes the measurements of the reference signals from the neighboring base stations, wherein one or more of the measurements have one or more associated aerial parameters; and
receiving (545), from the UE, an indication of a number of other aerial UEs within a predetermined range of the UE, wherein the number of other aerial UEs is provided with the measurement report or separately from the measurement report.

## Patentansprüche

1. Eine Vorrichtung für Drahtloskommunikation an einer Nutzereinrichtung bzw. UE (UE = user equipment), wobei die Vorrichtung Folgendes aufweist:
Mittel zum Empfangen (505), von einer ersten Basisstation, von Signalisierung, die Konfigurationsinformation aufweist zum Senden von Messungsberichten von Referenzsignalen von Nachbarbasisstationen, die an der UE gemessen werden, wobei die UE eine luftgestützte UE ist und die Konfigurationsinformation Parameter anzeigt, die mit luftgestützten Messungen der UE assoziiert sind, wobei die luftgestützten Parameter eine Höhe der UE aufweisen, die mit den Messungen der Referenzsignale von den benachbarten Basisstationen assoziiert ist, und wobei die luftgestützten Messungen konfiguriert sind in jeglichem von einem verbundenen Modus oder einem Ruhemodus oder einem inaktiven Modus der UE erlangt zu werden Mittel zum Messen (525) der Referenzsignalen von den benachbarten Basisstationen;
Mittel zum Identifizieren (540) einer Anzahl anderer luftgestützter UEs innerhalb eines vorbestimmten Bereichs der UE;
Mittel zum Senden (530) eines Messungsberichts, der Messungen der Referenzsignale und luftgestützte Parameter aufweist, die mit den Messungen assoziiert sind; und
Mittel zum Vorsehen (545) einer Anzeige der Anzahl von anderen luftgestützten UEs an die erste Basisstation mit dem Messungsbericht, wobei der Messungsbericht neu gemessene Referenzsignalmessungen oder zuvor gemessen Referenzsignalmessungen aufweist.

2. Vorrichtung nach Anspruch 1, wobei der Messungsbericht weiter eine oder mehrere Charakteristiken aufweist, die mit einer Hardware-Konfiguration der UE assoziiert sind.

3. Vorrichtung nach Anspruch 2, wobei die eine oder die mehreren Charakteristiken einen Antennentyp der UE, einen Typ der luftgestützten UE der UE oder irgendwelche Kombinationen davon aufweisen.

4. Vorrichtung nach Anspruch 1, die weiter Folgendes aufweist:
Mittel zum Empfangen von Funkressourcenkonfigurations- bzw. RRC-Signalisierung (RRC = radio resource control), die wenigstens einen Messungsbericht des luftgestützten Typs konfiguriert, der separat von Messungsberichten ist, die von einer bodenbasierten **UE** vorgesehen werden.

5. Vorrichtung nach Anspruch 1, die weiter Folgendes aufweist:
Mittel zum Bestimmen einer Anzahl von benachbarten Basisstationen, die in den Messungsbericht aufgenommen werden sollen, basierend wenigstens teilweise auf einem oder mehreren Grenzwerten, die mit der Konfigurationsinformation assoziiert sind.

6. Vorrichtung nach Anspruch 5, wobei die Anzahl von benachbarten Basisstationen begrenzt ist auf: eine konfigurierte maximale Anzahl von Basisstationen, die in einem luftgestützten Zustand gemessen werden, eine konfigurierte Gesamtanzahl von Basisstationen, die in dem luftgestützten Zustand und einem nicht luftgestützten Zustand gemessen werden, oder irgendeine Kombination davon.

7. Vorrichtung nach Anspruch 5, wobei die Anzahl von benachbarten Basisstationen, die in den Messungsbericht aufgenommen werden sollen, einer Anzahl von Basisstationen entspricht, die einen Messungswert haben, der auslöst, dass die UE die Messung aufzeichnet.

8. Vorrichtung nach Anspruch 1, wobei das Messen der Referenzsignale ansprechend auf ein Auslöserereignis durchgeführt wird, das mit der UE assoziiert ist.

9. Vorrichtung nach Anspruch 8, wobei das Auslöseereignis die Höhe der UE ist, die auf oder über einem konfigurierten niedrigeren Höhenschwellenwert liegt, oder die auf oder unter einem konfigurierten höheren Schwellenwert liegt, oder die innerhalb eines konfigurierten Bereichs von Höhen liegt.

10. Vorrichtung nach Anspruch 9, wobei eine separate Höhenmessung der UE implizit basierend auf dem Auslöserereignis angezeigt wird.

11. Vorrichtung nach Anspruch 1, wobei der Messungsbericht weiter eine Anzeige aufweist, ob berichtete Messungen durch die UE erlangt wurden, als sie in einem luftgestützten Zustand oder in einem bodengestützten Zustand war.

12. Vorrichtung nach Anspruch 1, die weiter Folgendes aufweist:
Mittel zum Senden, an die erste Basisstation, einer Fähigkeitsnachricht, die anzeigt, dass die UE eine Fähigkeit luftgestützt zu sein hat, die Fähigkeiten anzeigt zum Vorsehen unterschiedlicher Typen von Messungsberichten an die erste Basisstation, oder irgendwelche Kombinationen davon.

13. Eine Vorrichtung für Drahtloskommunikation an einer Basisstation, wobei die Vorrichtung Folgendes aufweist:
Mittel zum Senden (505), an eine Nutzereinrichtung bzw. UE (UE = user equipment) von Signalisierung, die Konfigurationsinformation zur Sendung von Messungsberichten durch die UE aufweist zum Anzeigen von Messungsberichten von Referenzsignalen von benachbarten Basisstationen, wobei die UE eine luftgestützte UE ist und die Konfigurationsinformation luftgestützte Parameter anzeigt, die mit luftgestützten Messungen der UE assoziiert sind, wobei die luftgestützten Parameter eine Höhe der UE aufweisen, die mit den Messungen der Referenzsignale von dem benachbarten Basisstationen assoziiert ist, und wobei Messungen der Referenzsignale konfiguriert sind während jeglichem von einem verbundenen Modus oder einem Ruhemodus oder einem inaktiven Modus an der UE durchgeführt zu werden;
Mittel zum Empfangen (530) eines Messungsberichts von der UE, der Messungen der Referenzsignale von den benachbarten Basisstationen aufweist, wobei eine oder mehrere der Messungen einen oder mehrere assoziierte luftgestützte Parameter haben; und
Mittel zum Empfangen (545), von der UE, einer Anzeige einer Anzahl von anderen luftgestützten UEs innerhalb eines vorbestimmten Bereichs der UE, wobei die Anzahl von anderen luftgestützten UEs mit dem Messungsbericht vorgesehen wird oder separat von dem Messungsbericht vorgesehen wird.

14. Ein Verfahren für Drahtloskommunikation an einer Nutzereinrichtung bzw. UE (UE = user equipment), wobei das Verfahren Folgendes aufweist:
Empfangen (505), von einer ersten Basisstation, von Signalisierung, die Konfigurationsinformation zur Sendung von Messungsberichten von Referenzsignalen von benachbarten Basisstationen aufweist, die an der UE gemessen werden, wobei die UE eine luftgestützte UE ist, und die Konfigurationsinformation Parameter anzeigt, die mit luftgestützten Messungen der UE assoziiert sind, wobei die luftgestützten Parameter eine Höhe der UE aufweisen, die mit den Messungen der Referenzsignale von den benachbarten Basisstationen assoziiert ist, und wobei die luftgestützten Messungen konfiguriert sind in jeglichem von einem verbundenen Modus oder einem Ruhemodus oder einem inaktiven Modus an der UE erlangt zu werden; Messen (525) der Referenzsignale von den benachbarten Basisstationen;
Identifizieren (540) einer Anzahl von anderen luftgestützten UEs innerhalb eines vorbestimmten Bereichs der UE;
Senden (530) eines Messungsberichts, der Messungen der Referenzsignale und luftgestützten Parameter aufweist, die mit den Messungen assoziiert sind; und
Vorsehen (545) einer Anzeige der Anzahl von anderen luftgestützten UEs an die erste Basisstation mit dem Messungsbericht, wobei der Messungsbericht neu gemessene Referenzsignalmessungen oder zuvor gemessen Referenzsignalmessungen aufweist.

15. Ein Verfahren für Drahtloskommunikation an einer Basisstation, wobei das Verfahren Folgendes aufweist:
Senden (505), an eine Nutzereinrichtung bzw. UE (UE = user equipment) von Signalisierung, die Konfigurationsinformation aufweist zum Senden von Messungsberichten durch die UE, um Messungen von Referenzsignalen von benachbarten Basisstationen anzuzeigen, wobei die UE eine luftgestützte UE ist, und die Konfigurationsinformation luftgestützte Parameter anzeigt, die mit luftgestützten Messungen der UE assoziiert sind, wobei die luftgestützten Parameter eine Höhe der UE aufweisen, die mit den Messungen der Referenzsignale von den benachbarten Basisstationen assoziiert ist, und wobei Messungen der Referenzsignale konfiguriert sind während jeglichem von einem verbundenen Modus oder einem Ruhemodus oder einem inaktiven Modus an der UE durchgeführt zu werden;
Empfangen (530) eines Messungsberichts von der UE, der die Messungen der Referenzsignale von den benachbarten Basisstationen aufweist, wobei eine oder mehrere der Messungen einen oder mehrere assoziierte luftgestützte Parameter haben; und
Empfangen (545), von der UE, einer Anzeige einer Anzahl von anderen luftgestützten UEs innerhalb eines vorbestimmten Bereichs der UE, wobei die Anzahl von anderen luftgestützten UEs mit dem Messungsbericht oder separat von dem mit Messungsbericht vorgesehen wird.

## Revendications

1. Appareil de communication sans fil au niveau d'un équipement utilisateur, UE, l'appareil comprenant :
des moyens de réception (505), en provenance d'une première station de base, d'une signalisation comprenant des informations de configuration pour la transmission de rapports de mesure de signaux de référence provenant de stations de base voisines, mesurés au niveau de l'UE, dans lequel l'UE est un UE aérien et les informations de configuration indiquent les paramètres associés aux mesures aériennes de l'UE, dans lequel les paramètres aériens incluant une hauteur de l'UE associée aux mesures des signaux de référence provenant des stations de base voisines, et dans lequel les mesures aériennes sont configurées pour être obtenues en mode connecté, en mode veille ou en mode inactif au niveau de l'UE ;
des moyens de mesure (525) des signaux de référence provenant des stations de base voisines ;
des moyens d'identification (540) d'un certain nombre d'autres UE aériens situés à une distance prédéterminée de l'UE ;
des moyens de transmission (530) d'un rapport de mesure comprenant les mesures des signaux de référence et les paramètres aériens associés à ces mesures ; et
des moyens pour fournir (545) une indication du nombre d'autres UE aériens à la première station de base avec le rapport de mesure, ce rapport comprenant mesures de signal de référence nouvellement mesurées ou des mesures de signal de référence précédemment mesurées.

2. - Appareil selon la revendication 1, dans lequel le rapport de mesure comprend en outre une ou plusieurs caractéristiques associées à la configuration matérielle de l'UE.

3. Appareil selon la revendication 2, dans lequel la ou les caractéristiques comprennent le type d'antenne de l'UE, le type d'UE aérien de l'UE, ou toute combinaison de ceux-ci.

4. Appareil selon la revendication 1, comprenant en outre :
des moyens pour recevoir une signalisation de configuration de ressources radio, RRC, qui configure au moins un rapport de mesure de type aérien distinct des rapports de mesure fournis par un UE terrestre.

5. Appareil selon la revendication 1, comprenant en outre :
des moyens pour déterminer le nombre de stations de base voisines à inclure dans le rapport de mesure, en fonction, au moins en partie, d'une ou plusieurs valeurs limites associées aux informations de configuration.

6. Appareil selon la revendication 5, dans lequel le nombre de stations de base voisines est limité à un nombre maximal configuré de stations de base mesurées lors d'état aérien, à un nombre total configuré de stations de base mesurées lors d'état aérien et lors d'état non aérien, ou à toute combinaison de ces éléments.

7. Appareil selon la revendication 5, dans lequel le nombre de stations de base voisines à inclure dans le rapport de mesure correspond au nombre de stations de base dont la valeur de mesure déclenche l'enregistrement de la mesure par l'UE.

8. Appareil selon la revendication 1, dans lequel la mesure des signaux de référence est effectuée en réponse à un événement déclencheur associé à l'UE.

9. Appareil selon la revendication 8, dans lequel l'événement déclencheur est la hauteur de l'UE qui est égale ou supérieure à un seuil de hauteur inférieur configuré, ou est égale ou inférieure à un seuil de hauteur supérieur configuré, ou qui se situe dans une plage de hauteurs configurée.

10. Appareil selon la revendication 9, dans lequel une mesure de hauteur distincte de l'UE est implicitement indiquée en fonction de l'événement déclencheur.

11. Appareil selon la revendication 1, dans lequel le rapport de mesure indique également si les mesures rapportées ont été obtenues par l'UE lors d'état aérien, ou lors d'un état terrestre.

12. Appareil selon la revendication 1, comprenant en outre :
des moyens de transmission, à la première station de base, d'un message de capacité indiquant que l'UE dispose d'une capacité aérienne, indiquant ses capacités à fournir différents types de rapports de mesure à la première station de base, ou toute combinaison de ces capacités.

13. Appareil de communication sans fil au niveau d'une station de base, l'appareil comprenant :
des moyens de transmission (505), à un équipement utilisateur, UE, d'une signalisation comprenant des informations de configuration pour la transmission de rapports de mesure par l'UE afin d'indiquer les mesures de signaux de référence provenant de stations de base voisines, dans lequel l'UE est un UE aérien, et les informations de configuration indiquant les paramètres aériens associés aux mesures aériennes de l'UE, dans lequel les paramètres aériens incluent une hauteur de l'UE associée aux mesures des signaux de référence provenant des stations de base voisines, et dans lequel les mesures des signaux de référence sont configurées pour être effectuées soit en mode connecté, soit en mode veille ou soit en mode inactif au niveau de l'UE ;
des moyens de réception (530) d'un rapport de mesure de l'UE incluant les mesures des signaux de référence provenant des stations de base voisines, une ou plusieurs mesures étant associées à un ou plusieurs paramètres aériens ; et
des moyens de réception (545), de l'UE, d'une indication du nombre d'autres UE aériens dans une plage prédéterminée de l'UE, le nombre d'autres UE aériens étant fourni avec le rapport de mesure ou séparément du rapport de mesure.

14. Procédé de communication sans fil au niveau d'un équipement utilisateur (UE), le procédé comprenant :
la réception (505), en provenance d'une première station de base, d'une signalisation comprenant des informations de configuration pour la transmission de rapports de mesure de signaux de référence provenant de stations de base voisines, mesurés au niveau de l'UE, dans lequel l'UE est un UE aérien et les informations de configuration indiquent les paramètres associés aux mesures aériennes de l'UE, dans lequel les paramètres aériens incluent une hauteur de l'UE associée aux mesures des signaux de référence provenant des stations de base voisines, et les mesures aériennes sont configurées pour être obtenues soit en mode connecté, soit en mode veille, soit en mode inactif au niveau de l'UE ;
la mesure (525) des signaux de référence provenant des stations de base voisines ;
l'identification (540) d'un certain nombre d'autres UE aériens dans une portée prédéterminée de l'UE ;
la transmission (530) d'un rapport de mesure comprenant les mesures des signaux de référence et les paramètres aériens associés à ces mesures ; et l'étape consistant à :
fournir (545) une indication du nombre d'autres UE aériens à la première station de base avec le rapport de mesure, ce rapport incluant les mesures de signaux de référence nouvellement mesurées ou les mesures de signaux de référence précédemment mesurées.

15. Procédé de communication sans fil au niveau d'une station de base, le procédé comprenant :
la transmission (505), à un équipement utilisateur (UE), d'une signalisation comprenant des informations de configuration pour la transmission de rapports de mesure par l'UE afin d'indiquer les mesures de signaux de référence provenant de stations de base voisines, dans lequel l'UE est un UE aérien et les informations de configuration indiquent les paramètres aériens associés aux mesures aériennes de l'UE, dans lequel les paramètres aériens incluent une hauteur de l'UE associée aux mesures des signaux de référence provenant des stations de base voisines, dans lequel les mesures des signaux de référence sont configurées pour être effectuées soit en mode connecté, soit en mode veille, soit en mode inactif au niveau de l'UE.
la réception (530) d'un rapport de mesure de l'UE incluant les mesures des signaux de référence provenant des stations de base voisines, une ou plusieurs mesures étant associées à un ou plusieurs paramètres aériens ; et l'étape consistant à :
recevoir (545), de l'UE, une indication d'un certain nombre d'autres UE aériens dans une plage prédéterminée de l'UE, le nombre d'autres UE aériens étant fourni avec le rapport de mesure ou séparément du rapport de mesure.
